# EUROPÄISCHE PATENTSCHRIFT

(11) **EP 3 102 821 B1**
(45) Veröffentlichungstag und Bekanntmachung des Hinweises auf die Patenterteilung: **26.09.2018**
(21) Anmeldenummer: 15702463.9
(22) Anmeldetag: 02.02.2015
(51) Int. Cl.: F03D 13/10, F03D 80/50

(54) **POSITIONIER-VORRICHTUNG FÜR EINE TURBINE EINER WINDENERGIEANLAGE**
POSITIONING DEVICE FOR A TURBINE OF A WIND TURBINE
DISPOSITIF DE POSITIONNEMENT POUR TURBINE D'ÉOLIENNE

(30) Priorität: 03.02.2014 DE 102014001421
(43) Veröffentlichungstag der Anmeldung: 14.12.2016
(73) Patentinhaber: SkyWind GmbH, 25813 Husum (DE)
(72) Erfinder: RICHERT, Frank, 25920 Stedesand (DE)
(74) Vertreter: Winter, Brandl, Fürniss, Hübner, Röss, Kaiser, Polte - Partnerschaft mbB
(86) Internationale Anmeldenummer: PCT/EP2015/052069
(87) Internationale Veröffentlichungsnummer: WO 2015/114137

(56) Entgegenhaltungen:
- EP-A1- 2 604 850
- DE-A1-102009 056 245
- GB-A- 2 488 803
- US-A1- 2009 324 380
- US-A1- 2013 106 109

## Beschreibung

Die vorliegende Erfindung betrifft eine Vorrichtung zur genauen Positionierung einer Turbine einer Windenergieanlage, und insbesondere eine Vorrichtung zur Positionierung einer Turbine während eines Montagevorgangs an der Windenergieanlage.

Windenergieanlagen der verschiedensten Konzepte sind bereits seit längerer Zeit bekannt. Bei den bekannten Windenergieanlagen ist im Allgemeinen ein Maschinenträger, der eine Turbine mit Rotor und Rotorblättern sowie einen Triebstrang mit Generator und gegebenenfalls einem Getriebe sowie einer Bremse aufnimmt, auf der Spitze oder einem oberen Teil eines Turms der Windenergieanlage angeordnet und vorzugsweise auf einem Azimut-Lager gelagert, so dass eine Ausrichtung des Rotors und damit des Maschinenträgers in jeder Himmelsrichtung möglich ist. Auch bei einer veränderlichen Windrichtung kann somit der Rotor der Windenergieanlage optimal ausgerichtet werden. Zum Verstellen des Maschinenträgers sind dabei Antriebe zur Azimutverstellung vorgesehen, die den Maschinenträger und damit den Rotor in eine gewünschte Stellung zum Wind bringen, wobei in Form von Steuerungen oder Regelungen eine kontinuierliche Anpassung an sich verändernde Windrichtungen erfolgt.

Im Allgemeinen ist bei bekannten Windenergieanlagen, die eine bestimmte Nennleistung überschreiten und somit beispielsweise mehr als 500 kW an Leistung aufweisen, der Rotor der Windenergieanlage aus der Windrichtung gesehen vor dem Turm der Windenergieanlage angeordnet, und es besteht der Rotor vorzugsweise aus zwei oder drei an der Rotornabe angeordneten und verstellbaren Rotorblättern. Der Rotor dreht sich bei einer entsprechenden Windlast um eine im Wesentlichen horizontale Achse, die sich in einer Ebene etwa senkrecht zur Längsachse des Turms erstreckt oder auch gegenüber dieser Ebene um wenige Winkelgrade in Abhängigkeit von vorbestimmten Bedingungen, wie beispielsweise einer Windlast (Windgeschwindigkeit), nach oben geneigt sein kann.

Im Allgemeinen weisen Windenergieanlagen als Grundelemente einen starren Turm auf, an dessen oberen Teil ein Maschinenhaus angeordnet ist, das einen Turbinenträger aufweist, in den eine Turbine bei der Montage der Windenergieanlage eingesetzt wird. Die Turbine kann dabei den Rotor (die Rotorblätter), die Rotornabe, entsprechende Lagerungen einer Rotorachse sowie einen Generator, das Getriebe und entsprechende Bremseinrichtungen aufweisen. Zur Montage der Windenergieanlage wird im Allgemeinen ein für die entsprechenden Lasten ausgelegter Kran verwendet, mittels dessen die einzelnen Teile des Maschinenhauses (Turbinenträger und Turbine) in einer vorbestimmten Reihenfolge nach einer möglichen Vormontage auf dem Boden im Bereich des Turms angehoben und an der Turmspitze zusammengesetzt und befestigt werden.

Bei dem Anheben beispielsweise der Teile des Maschinenhauses, wie der Turbine, hängen die betreffenden Elemente oder Einrichtungen frei an einem Kranhaken, und können hinsichtlich ihrer Position im Raum gegebenenfalls mit Führungselementen (wie beispielsweise mittels entsprechender Seile) stabilisiert und in bestimmtem Umfang geführt werden. Das Bedienpersonal des Krans muss versuchen, die am Kranhaken angeordneten Teile des Maschinenhauses (beispielsweise die Turbine) möglichst langsam und präzise in die erforderliche Befestigungs- oder Montageposition zu bringen, wobei typischerweise eine Flansch-Schraubverbindung zwischen den jeweiligen zu verbindenden Elementen des Maschinenhauses vorgesehen ist. Befindet sich das zu befestigende Element (beispielsweise die Turbine) bereits in einem geringen Abstand zu dem bereits im Maschinenhaus montierten Turbinenträger, werden die vergleichsweise kurzen Wege im Bereich weniger Zentimeter gegebenenfalls durch Zentrierstifte oder weitere Positionierhilfen geführt.

Es ist verständlich, dass eine derartige Vorgehensweise die Gefahr beinhaltet, dass infolge einer möglichen Fehlbedienung oder durch äußere Einflüsse wie Windstöße, die frei am Kranhaken hängenden Elemente bewegt werden und eine unerwünschte Berührung zwischen den miteinander zu befestigenden Teilen auftritt, so dass Beschädigungen der jeweiligen Befestigungselemente nicht ausgeschlossen werden können. Ferner erfordert eine derartige Vorgehensweise die Bereitstellung eines entsprechend hinsichtlich der Höhe und der Tragfähigkeit dimensionierten Krans und nimmt eine bestimmte Zeit in Anspruch. Eine erfolgreiche und für die vorgesehenen Befestigungselemente zerstörungsfreie Positionierung beispielsweise der Turbine im Maschinenhaus im oberen Bereich des Turms hängt hinsichtlich des erforderlichen Zeitverlaufs neben den äußeren Witterungsbedingungen (Sicht, Windgeschwindigkeiten) ebenfalls in hohem Maße von den Fähigkeiten des Bedienpersonals des Krans ab. Der Montageablauf unterliegt damit einer gewissen Unsicherheit und dem Risiko einer Beschädigung und damit weiteren Verzögerungen der Fertigstellung der Windenergieanlage sowie weiterer Kosten.

Es wird daher bei der Montage von Windenergieanlagen erstrebt, dass in Verbindung mit der Windenergieanlage selbst am Turm entsprechende Einrichtungen vorgesehen sind, die eine Kranfunktion darstellen, so dass zumindest nach Fertigstellung des Turms und dem Anbringen wesentlicher Teile des Maschinenhauses weitere erforderliche Teile ohne Verwendung eines externen Krans montiert und mit größerer Zuverlässigkeit werden können.

In diesem Zusammenhang zeigt die Druckschrift WO 2009/056701 A2 eine Windenergieanlage mit zwei Rotorblättern, die mittels einer internen Kranfunktion teilweise demontiert werden kann, wobei der Rotor zusammen mit den Rotorblättern von einer Gondel an der Turmspitze, an der die Windenergieanlage vorgesehen ist, über im Turm geführte Seilzüge herabgelassen wird. Die Rotorblätter können jeweils über ein Seil oder dergleichen beim Herablassen hinsichtlich ihrer räumlichen Lage positioniert und gesichert werden, wobei der Rotor beabstandet von dem Turm abgesenkt und im unteren Bereich des Turms entlang zweier Führungsseile von dem Turm weggeführt wird. Nach dem Absenken der Gondel bis zum Erdboden kann die gesamte Einheit der Gondel abgelegt werden, so dass Demontage oder Montage oder Wartungsarbeiten durchgeführt werden können.

Die Druckschrift US 2009/0087311 A1 zeigt ein Verfahren, bei dem eine Gondel einer Windenergieanlage mittels eines externen Mechanismus zum Aufbau des Turms der Windenergieanlage vorgesehen ist. Nachdem der Turm eine vorbestimmte Höhe erreicht hat, wird mittels eines weiteren Mechanismus eine am Fuß des Turms angeordnete Gondel zu ihrer Betriebsposition angehoben. Die Gondel wird entlang des Turms geführt, wobei der Turm in eine Öffnung in der Gondel eingreift und die Bewegung mit Seilzügen durchgeführt wird.

Die Druckschrift US 4 311 434 A offenbart eine Einrichtung zum Anheben und Absenken einer Turbine einer Windenergieanlage, wobei eine mechanische verfahrbare Einrichtung in der Art eines Aufzugs am Turm der Windenergieanlage angeordnet ist, mittels dessen die Gondel von einer Position in der Nähe des Erdbodens zur Betriebsposition angehoben werden kann. Auf der entlang des Turms verfahrbaren Einrichtung ist ein spezieller Schlitten angeordnet, mittels dessen nach Erreichen der oberen Anhebeposition auf dem Turm der Windenergieanlage die Turbine von der verfahrbaren Einrichtung zu ihrer Montage- oder Betriebsposition senkrecht zur Turmachse gebracht werden kann. Zu Wartungsarbeiten oder zur Demontage kann in umgekehrter Reihenfolge die Turbine wieder bis zum Erdboden abgesenkt werden.

Die Druckschrift DE 10 2009 056 245 A1 offenbart eine Windenergieanlage mit einer Hebevorrichtung, wobei die Hebevorrichtung vorgesehen ist zum Heben oder Senken einer Energiewandlungseinheit von und zu einer Montageposition am oberen Ende eines Turms der Windenergieanlagen. Die Anordnung der Hebevorrichtung umfasst an einem Tragwerk angeordnete Umlenkeinrichtungen, über die zum Anheben oder Absenken erforderliche Hubseile geführt werden. Mittels der mehreren Hubseile wird die gesamte Energiewandlungseinheit angehoben und in eine Position am Maschinenhaus angeordnet, bei der sie befestigt werden kann. Im Falle einer erforderlichen Reparatur kann in gleicher Weise ein Absenken erfolgen.

Die Druckschrift GB 2 488 803 A offenbart Turbinen von Windenergieanlagen und Verfahren zur Montage derselben. Die Montage einer Turbine der Windenergieanlage erfolgt mittels eines externen Krans durch Anheben zu einem oberen Ende des Turms der Windenergieanlage. An der Turbine und an dem oberen Bereich des Turms sind jeweils entsprechende mechanische Befestigungseinrichtungen angeordnet, so dass bei der Montage die jeweiligen Befestigungseinrichtungen miteinander verbunden werden können. Nach der Verbindung steht die Turbine in der richtigen Position relativ zu dem Turm. Die Befestigungseinrichtungen der Turbine und des Turms weisen jeweils schräge Winkel auf, so dass im Ergebnis die Rotationsebene der Rotorblätter im Wesentlichen parallel zur Achse des Turms verläuft. Bei der Montage der Turbine sind die Befestigungseinrichtungen miteinander gelenkig und damit drehbar verbunden und werden in einer entsprechenden Endlage befestigt.

Die Druckschrift US 2009/0324380 A1 offenbart ein Verfahren zum Bewegen von Komponenten einer Windenergieanlage, wie beispielsweise einer Windturbine, wobei im Einzelnen die Windturbine von einer Transportposition am Fuß des Turms der Windenergieanlage zu ihrer Befestigungsposition angehoben und transportiert wird. Zur Montage ist hierzu eine aus zueinander beweglichen Hebeln ausgebildete Handhabungseinheit vorgesehen. Die an der Windturbine angeordnete Handhabungseinheit wird mit einem Seil eines externen Krans verbunden, und es wird die Turbine in Verbindung mit der Handhabungseinheit angehoben. Während des Anhebens kann die Windturbine mittels der Handhabungseinheit und gestützt durch den Kran gedreht werden, so dass bei Erreichen der Montageposition die Turbine die geeignete Position zur Befestigung aufweist. Die Handhabungseinheit ist vorzugsweise an der Nabe der Windturbine angeordnet. Zum Tragen der Windturbine mittels des Krans und zum Bewegen bzw. Neigen oder Drehen der Windturbine kann die Handhabungseinheit verschiedene Positionen einnehmen und mittels einer Betätigungseinrichtung verstellt werden.

Die Druckschrift EP 2 604 850 A1 offenbart eine Anhebeeinrichtung für eine Last, wobei die Last beispielsweise ein Windturbinengenerator sein kann. Die Gesamtanordnung der Anhebeeinrichtung einschließlich des Windturbinengenerators wird mittels eines externen Krans angehoben, wobei im Bereich des Angreifens eines Kranseils eine Vorrichtung vorgesehen ist zum Drehen oder Schwenken des Windturbinengenerators einschließlich eines Trägerelements um einen vorbestimmten Winkel. Es wird mit dem Anpassen oder Verstellen des Winkels eine Position der Gesamtanordnung an eine spezielle Befestigungsposition erreicht. Es kann beispielsweise der betreffende Winkel angepasst werden an eine Winkellage des Maschinenhauses zur Vereinfachung der Befestigung des Windturbinengenerators am Maschinenhaus.

Schließlich offenbart die Druckschrift WO 2012/003985 A1 eine Windenergieanlage mit einer Kranfunktion, wobei die Turbine der Windenergieanlage mittels entsprechender Seilzüge entsprechend der Betriebsposition angehoben und bewegt werden kann. Befindet sich beispielsweise die mittels dieser Kranfunktion angehobene Turbine der Windenergieanlage frei hängend in der Nähe des Maschinenhauses, greift ein Teil der Turbine in ein spezielles Führungselement und bildet einen zeitweiligen Drehpunkt, so dass unmittelbar am Maschinenhaus die Turbine in das Maschinenhaus zu ihrer endgültigen Montageposition geschwenkt werden kann, so dass am Ende der Gesamtbewegung der Turbine bis zur endgültigen Montageposition eine angemessene Führung der erforderlichen Schwenkbewegung gewährleistet ist.

Mit den aus der WO 2012/003985 A1 bekannten Einrichtung zum Führen der Schwenkbewegung der Turbine kurz vor der endgültigen Montageposition ist es erforderlich, die Schwenkbewegung vor der Montageposition langsam und vorsichtig durchzuführen, so dass unmittelbar am Ende der Schwenkposition die jeweils miteinander zu verbindenden Teile der Turbine und des Turbinenträgers im Maschinenhaus aneinander präzise anliegen. Infolge äußerer Störungen durch eine wechselnde Windlast während des Montagevorgangs und entsprechende Toleranzen bei der Fertigung und entsprechende Elastizität der verwendeten Materialien und Bauteile ist trotz der Führung der Schwenkbewegung die präzise Anordnung der miteinander zu verbindenden Teile schwierig.

Der vorliegenden Erfindung liegt daher die Aufgabe zugrunde, eine Vorrichtung zur genauen Positionierung einer Turbine einer Windenergieanlage der eingangs genannten Art derart auszugestalten, dass auf einfache Weise eine präzise Bewegung der Turbine zur Montageposition mit einem geringen Risiko einer Beschädigung von Befestigungselementen gewährleistet ist.

Erfindungsgemäß wird diese Aufgabe bezüglich einer Positionier-Vorrichtung zum Positionieren einer Turbine einer Windenergieanlage mit den in den Patentansprüchen angegebenen Merkmalen gelöst.

In einem ersten Aspekt gemäß dem unabhängigen Anspruch 1 betrifft die vorliegende Erfindung eine Positioniervorrichtung zum Positionieren einer Turbine einer Windenergieanlage während der Montage oder Demontage der an einem Seil hängenden Turbine, mit zumindest einer Fangeinrichtung, die an dem Maschinenhaus der Windenergieanlage drehbar angeordnet ist und eine Vertiefung aufweist zur Aufnahme eines Fangstabs, der fest an der Turbine angeordnet ist, zum Einleiten einer Schwenkbewegung der Turbine in das Maschinenhaus zu einer Befestigungsposition, zumindest einem Aktuator, der einerseits mit dem Maschinenhaus, der einerseits mit dem Maschinenhaus und andererseits mit der Fangeinrichtung verbunden ist, zum Bewegen der Fangeinrichtung, und einer Steuerungseinrichtung zum Ansteuern des Aktuators zum Bewegen der Fangeinrichtung, wobei die Steuerungseinrichtung ausgebildet ist zum Ansteuern des Aktuators derart, dass der Aktuator nach der Schwenkbewegung der Turbine eine translatorische Restbewegung der Turbine zur Befestigungsposition zulässt.

In einem zweiten Aspekt gemäß dem Unteranspruch 5 betrifft die vorliegende Erfindung eine Positioniervorrichtung zum Positionieren einer Turbine einer Windenergieanlage während der Montage der an einem Seil hängenden Turbine, mit zumindest einer an einem Maschinenhaus der Windenergieanlage angeordneten Fangeinrichtung, die mehrteilig ausgeführt ist und zumindest einen Festteil, der fest mit dem Maschinenhaus verbunden ist, und einen beweglichen Teil aufweist, der drehbar um eine Drehachse mit dem Maschinenhaus verbunden ist und zwischen dem Festteil und dem beweglichen Teil ein Zwischenbereich ausgebildet ist zur Aufnahme eines Fangstabs, der fest an der Turbine angeordnet ist, zum Einleiten einer Schwenkbewegung der Turbine in das Maschinenhaus zu einer Befestigungsposition, zumindest einem Aktuator der einerseits mit dem Maschinenhaus und andererseits mit dem beweglichen Teil der Fangeinrichtung verbunden ist zum Bewegen des beweglichen Teils um die Drehachse, wobei der Aktuator mittels einer Steuerungseinrichtung zur Durchführung der Bewegung angesteuert wird, wobei die Steuerungseinrichtung ausgebildet ist zum Ansteuern des Aktuators, derart, dass durch die Betätigung des beweglichen Teils durch den Aktuator der Zwischenbereich zur Aufnahme des Fangstabs in seiner Größe veränderlich ist.

Im Ergebnis kann mit der erfindungsgemäßen Positionier-Vorrichtung gemäß der vorstehenden Beschreibung erreicht werden, dass auf sichere Weise ein Anhebevorgang im Zusammenhang mit einem Montagevorgang bei der Positionierung von anzuhebenden Elementen einer Windenergieanlage, wie beispielsweise der Turbine, eine Zwangsführung gewährleistet ist, die den Montagevorgang von äußeren Einflüssen, wie beispielsweise einer schlechten Sicht oder wechselnden Windgeschwindigkeiten sowie Toleranzen bei der Fertigung der miteinander zu verbindenden Teile unabhängig macht. Der Montagevorgang wird erheblich erleichtert und gewährleistet mit einem minimalen Risiko einer Beschädigung die Durchführung des Montagevorgangs innerhalb einer angemessenen Zeitdauer.

Insbesondere wird die restliche Bewegung der zu montierenden Teile kurz vor dem Zusammensetzen jeweiliger Befestigungselemente der Turbine und des Turbinenträgers der Windenergieanlage, nicht mehr in Verbindung mit der Schwenkbewegung um den zeitweiligen Drehpunkt sondern mittels einer im wesentlichen translatorischen Restbewegung zur endgültigen Montageposition erreicht, so dass die noch erforderliche Restbewegung einerseits mit einem geringen Aufwand und andererseits mit einer großen Präzision durchgeführt werden kann. Die miteinander zu montierenden Teile und speziell die in Anlage zu bringenden Flächen stehen während dieser im wesentlichen translatorischen Restbewegung einander annähernd parallel gegenüber, so dass eine Beschädigung durch ein auch geringes Verkippen der miteinander in Anlage zu bringenden Flächen weitgehend vermieden wird und somit das Risiko einer Beschädigung sehr gering ist. Des Weiteren besteht die Möglichkeit, in Verbindung mit der translatorischen Restbewegung einfache Führungselemente vorzusehen, so dass die endgültige Positionierung in der Montageposition oder Befestigungsposition sehr leicht und nahezu ohne Risiko erreicht werden kann.

Die Vorrichtung gemäß der vorliegenden Erfindung führt somit zu einer erleichterten und risikoarmen Montage der Windenergieanlage, so dass vermeidbare Kosten durch Beschädigung oder durch längere Montagezeiten wirksam vermieden werden können. Dies trifft auch in den Fällen zu, in denen zu Wartungszwecken oder für Reparaturarbeiten die Windenergieanlage und speziell zumindest die Turbine demontiert und später wieder montiert werden muss. In all diesen Fällen führt die erfindungsgemäße Vorrichtung zu den Vorteilen einer sicheren und präzisen Bewegung der Turbine zu und von der endgültigen Montageposition, so dass auch Vorteile bei der weiteren Lebensdauer der Windenergieanlage ungeachtet der Vorteile im Zusammenhang mit der Erstmontage gewährleistet sind. Ferner kann im Allgemeinen auf einen externen Kran verzichtet werden. Mit der erfindungsgemäßen Anordnung ist es somit möglich, den Montagevorgang (und des Weiteren auch der Demontagevorgang) von zufälligen Bedingungen wie den Wetterbedingungen oder den Fähigkeiten eines Bedienpersonals eines Krans zu entkoppeln und unter Anwendung der vorstehend beschriebenen Vorrichtung gemäß der vorliegenden Erfindung zwangsläufig zu einer Sicherheit während des Montagevorgangs und zu einem guten Montageergebnis zu gelangen, wobei dies im Wesentlichen automatisch erreicht werden kann und somit für das an der Montage beteiligte Personal leicht überschaubar und planbar ist.

Mit der in der Windenergieanlage integrierten Kranfunktion kann ferner erreicht werden, dass bei Windenergieanlagen mit Mehrblattrotoren die entsprechende Turbine einschließlich der Rotorblätter ohne einen weiteren Platzbedarf und ohne weitere Einrichtungen zur oberen Betriebsposition hochgebracht oder für Wartungs- und Reparaturmaßnahmen auf den Boden vor dem Turm abgesenkt werden können. Der erforderliche Platzbedarf ist dabei auch insofern gering, als bei der Errichtung einer Windenergieanlage die Rotorblätter auf dem Boden in einer Montageposition unmittelbar neben dem Turm an dem Rotor bzw. an der Rotornabe befestigt werden können, dann in dieser Ausrichtung vertikal nach oben eng an dem Turm entlang mittels der Kranfunktion verfahren werden können, und erst in der Höhe in der Nähe der endgültigen Betriebsposition auf sichere Weise gekippt werden können, wobei beim Kippen einerseits die Rotorblätter nicht mehr mit benachbarten Gegenständen kollidieren können und andererseits der Kippvorgang mittels der Zwangsführung sicher und präzise durchgeführt werden kann. Es bedarf zur Durchführung des sicheren Montagevorgangs keiner weiteren Einrichtungen.

Der vorstehend verwendete Begriff des Bodens betrifft den Erdboden am Fuß des Turms der Windenergieanlage, die auf dem Land angeordnet ist. Bei sogenannten Offshore-Anlagen in der Nähe einer Küste ist der Begriff des Bodens im Sinne einer schwimmenden Plattform zu interpretieren, die sich am Fuß des Turms befindet. Vorteilhafte Weiterbildungen der vorliegenden Erfindung sind in den Unteransprüchen beschrieben. Bei der Vorrichtung gemäß dem ersten Aspekt kann die Fangeinrichtung einstückig ausgebildet sein, und der Aktuator kann die Fangeinrichtung zusammen mit dem Fangstab zur Durchführung der translatorischen Restbewegung der Turbine um eine vorbestimmte Strecke zur Befestigungsposition bewegen.

Bei der Vorrichtung gemäß dem ersten Aspekt kann an jeder Seite des Maschinenhauses eine Fangeinrichtung angeordnet sein, und der an der an dem Seil hängenden Turbine angeordnete Fangstab kann beim Anheben der Turbine in sämtliche Fangeinrichtungen eingreifen und zur Durchführung der Schwenkbewegung geführt werden.

Bei der Vorrichtung gemäß dem ersten Aspekt kann jede Fangeinrichtung mit einem Aktuator betätigt werden zur Durchführung einer individuellen Bewegung jeder Fangeinrichtung, oder die Fangeinrichtungen können mittels eines Verbindungsstabs miteinander verbunden sein und durch einen gemeinsamen Aktuator betätigt werden, der mit dem Verbindungsstab verbunden ist.

Bei der Vorrichtung gemäß dem zweiten Aspekt der vorliegenden Erfindung kann der Festteil der Fangeinrichtung einen Vorsprung mit einem Anlagebereich aufweisen zur Aufnahme des Fangstabs bei dem Anheben der Turbine, wobei der Fangstab zwischen dem Anlagebereich und dem beweglichen Teil zur Durchführung der Schwenkbewegung der Turbine gehalten werden kann.

Bei der Vorrichtung gemäß dem zweiten Aspekt kann nach der Beendigung der Schwenkbewegung der Turbine der Aktuator derart angesteuert werden, dass das bewegliche Teil durch den Aktuator um eine vorbestimmte Strecke versetzt wird, und der an dem beweglichen Teil anliegende Fangstab kann zusammen mit der Turbine eine translatorische Restbewegung senkrecht zur einer Anhebebewegung der der Turbine zu einer Befestigungsposition durchführen.

Bei der Vorrichtung gemäß dem zweiten Aspekt kann an jeder Seite des Maschinenhauses eine Fangeinrichtung angeordnet sein, und es kann der an der an dem Seil hängenden Turbine angeordnete Fangstab in sämtliche Fangeinrichtungen eingreifen und zur Durchführung der Schwenkbewegung der Turbine gehalten werden.

Bei der Vorrichtung gemäß dem zweiten Aspekt kann das bewegliche Teil jeder Fangeinrichtung mit einem Aktuator betätigt werden zur Durchführung der individuellen Bewegung jedes beweglichen Teils der Fangeinrichtung, oder es können die jeweiligen beweglichen Teile der Fangeinrichtungen auf jeder Seite des Maschinenhauses miteinander mittels eines Verbindungsstabs verbunden und durch einen gemeinsamen Aktuator betätigt werden, der mit dem Verbindungsstab verbunden ist.

Bei der Vorrichtung gemäß dem zweiten Aspekt kann das bewegliche Teil an seiner inneren Seite gegenüber dem Festteil eine Führungskontur aufweisen zum Halten des Fangstabs während der translatorischen Restbewegung, und zum Gleiten des Fangstabs entlang der Führungskontur zum Erlauben einer vorbestimmten Absenkbewegung des Fangstabs während der translatorischen Bewegung.

Bei der Vorrichtung gemäß dem zweiten Aspekt kann die Steuerungseinrichtung ausgebildet sein zum Ansteuern des Aktuators derart, dass die von dem Aktuator auf das bewegliche Teil ausgeübte Kraft zum Zulassen der translatorischen Restbewegung und der translatorischen Absenkbewegung in vorbestimmter Weise vermindert wird.

Die vorliegende Erfindung wird nachstehend anhand von Ausführungsbeispielen im Einzelnen unter Bezugnahme auf die zugehörigen Figuren beschrieben. Es zeigen:
Fig. 1 eine schematische Darstellung des Anhebens einer Turbine einer Windenergieanlage vor der Schwenkbewegung in das Maschinenhaus mit der Positionier-Vorrichtung gemäß einem ersten Ausführungsbeispiel der Erfindung, Fig. 2 eine schematische Darstellung einer am Maschinenhaus angeordneten Fangeinrichtung mit einer zugehörigen Betätigungseinrichtung gemäß dem ersten Ausführungsbeispiel der Erfindung,
Fig. 3 eine schematische Darstellung einer am Maschinenhaus angeordneten Fangeinrichtung mit einer alternativen Anordnung von Betätigungseinrichtungen,
Fig. 4 eine schematische Darstellung des Maschinenhauses einer Windenergieanlage mit einer montierten Turbine,
Fig. 5 eine schematische Darstellung einer Turbine einer Windenergieanlage kurz vor Beginn der Schwenkbewegung mit einer Fangeinrichtung der Positionier-Vorrichtung gemäß einem zweiten Ausführungsbeispiel der Erfindung,
Fig. 6 eine schematische detaillierte Darstellung der in Fig. 5 gezeigten Fangeinrichtung gemäß dem zweiten Ausführungsbeispiel der Erfindung,
Fig. 7 (Figuren 7A, 7B, 7C, 7D) sind verschiedene schematische Darstellungen der Wirkungsweise der Fangeinrichtung gemäß dem zweiten Ausführungsbeispiel, und
Fig. 8 eine vereinfachte und schematische Darstellung der Wirkungsweise der Fangeinrichtung gemäß dem zweiten Ausführungsbeispiel bei der Endbewegung der Montage der Turbine im Maschinenhaus der Windenergieanlage.

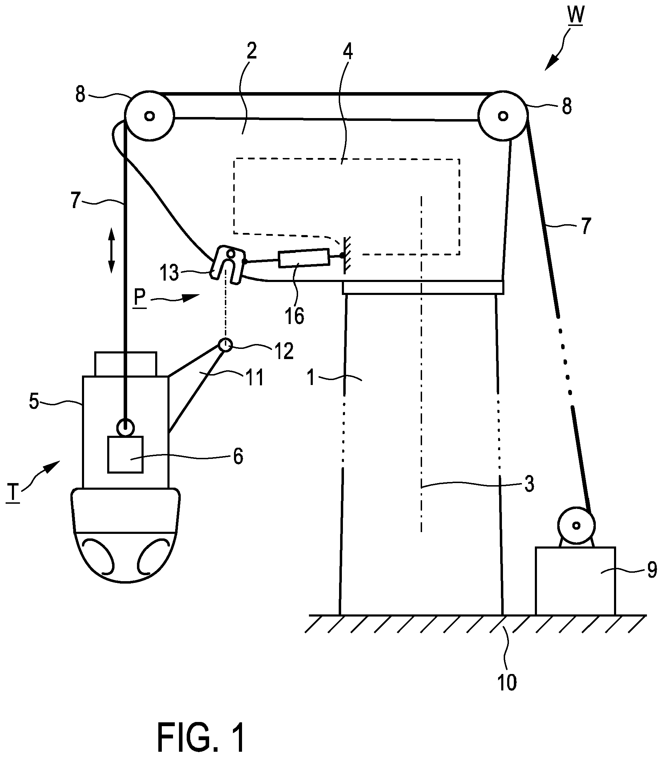

Beschreibung bevorzugter Ausführungsbeispiele Erstes Ausführungsbeispiel:
Die Vorrichtung zum Positionieren einer Turbine einer Windenergieanlage gemäß einem ersten Ausführungsbeispiel wird nachstehend anhand der Figuren 1 bis 4 beschrieben.

Fig. 1 zeigt Teile einer Windenergieanlage W in schematischer und vereinfachter Darstellung, wobei lediglich die zur Darstellung der vorliegenden Erfindung erforderlichen Teile gezeigt sind. Die in Fig. 1 gezeigte Positionier-Vorrichtung wird nachstehend vereinfacht als Vorrichtung P bezeichnet.

Die betreffende Windenergieanlage W gemäß Fig. 1 umfasst einen im Wesentlichen zylindrischen oder in vorbestimmter Weise konisch angeordneten Turm 1, an dessen oberen Bereich oder oberen Ende ein Maschinenhaus 2 relativ zum Turm 1 drehbar angeordnet ist. Die Drehachse zur Drehung des Maschinenhauses relativ zum Turm entspricht im Wesentlichen einer Längsachse 3 des Turms 1 entlang dessen Längserstreckung. Die Drehung des Maschinenhauses 2 findet somit in einer Ebene senkrecht zur Längsachse 3 des Turms 1 statt. Der Turm 1 ist auf im Allgemeinen auf dem Boden befestigt bzw. angeordnet, beispielsweise mittels einer Grundplatte 10.

Der Begriff des Bodens betrifft den Erdboden am Fuß des Turms T der Windenergieanlage W, falls diese auf dem Land angeordnet ist oder auch ein dort angeordnete Montageplattform. Bei sogenannten Offshore-Anlagen in der Nähe einer Küste ist im Allgemeinen der Turm 1 auf dem Meeresboden angeordnet, und es ist daher der Begriff des Bodens im Sinne einer schwimmenden Plattform zu interpretieren, die sich (ständig oder zumindest zeitweise) am Fuß des Turms 1 befindet. Die vorliegende Erfindung ist bei Windenergieanlagen W ungeachtet ihrer Anordnung an Land oder auf dem Meeresboden anwendbar. Im Inneren des Maschinenhauses 2 ist ein Turbinenträger 4 angeordnet, an welchem eine Turbine 5 nach der Montage angeordnet ist und sich bei dieser Anordnung in ihrer bestimmungsgemäßen Betriebsposition befindet. Die Turbine T umfasst den mechanischen Triebstrang und somit im Wesentlichen sich drehende Teile wie die Nabe, an der die Rotorblätter befestigt werden, entsprechende Lagereinrichtungen, eine Rotorwelle sowie gegebenenfalls ein Getriebe und eine Bremseinrichtung. Es kann auch ein Generator zur Turbine T gerechnet werden. Fig. 1 zeigt die Turbine T in einem noch nicht montierten Zustand bzw. vor der Montage an den Turbinenträger 4.

Die vorstehend angegebenen Teile sind in der vereinfachten und schematischen Darstellung gemäß Fig. 1 der Turbine 5 nicht im Einzelnen gezeigt.

Die Turbine T umfasst ferner eine Seilbefestigung 6, an der ein Seil 7 befestigt ist und mittels dessen die Turbine T in ihrer Gesamtheit zwischen einer Erdboden-Oberfläche am Fuß des Turms 1 und dem Bereich des Maschinenhauses entlang der Erstreckung des Turms 1 bewegt werden kann. Zu diesem Zweck ist das Seil 7 über am Maschinenhaus 2 angeordnete Umlenkrollen 8 geführt und steht in Verbindung mit einer am Turm 1 oder davon unabhängig an der Oberfläche des Erdbodens oder der zu dem Turm 1 gehörenden Grundplatte 10 angeordneten Wickeleinrichtung zum gesteuerten Auf- und Abwickeln des Seils 7, beispielsweise in Form einer Seilwinde 9.

Die Seilwinde 9 ist im Allgemeinen ortsfest auf der Höhe des Erdbodens am Fuß des Turms 1 und beispielsweise an der Grundplatte 10 des Turms 1 angeordnet und ist in der Lage, durch entsprechende mechanische Einrichtungen (beispielsweise starke Elektromotoren) mittels des Seils 7 die Turbine T vom Erdboden bis zur endgültigen Betriebsposition (Montageposition) anzuheben, wobei die Gesamtlast der Turbine 5 mittels des Seils 7 und der Seilwinde 9 getragen wird. Im Falle einer Offshore-Windenergieanlage kann die Seilwinde 9 an einer schwimmenden Plattform oder am Turm 1 selbst angeordnet sein.

Gemäß der Darstellung in Fig. 1 ist die Turbine T mittels der Seilwinde 9 und des Seils 7 soweit angehoben, dass sie sich am Seil 7 hängend in der Nähe des Maschinenhauses 2 befindet. Mittels der Seilwinde 9 und des Seils 10 wird die Turbine T zu ihrer endgültigen Montageposition bewegt, indem das Seil weiter angezogen wird und die Turbine T in das Maschinenhaus 2 geschwenkt wird. Zur Durchführung des Schwenkvorgangs dient die nachstehend im Einzelnen beschriebene Positioniervorrichtung P. Die Positionier-Vorrichtung P umfasst Bauelemente, die an der Turbine T angeordnet sind, sowie Bauelemente, die an dem Maschinenhaus 2 angeordnet sind und die für eine vorbestimmte Interaktion ausgebildet sind. Diese werden nachstehend beschrieben.

Im Einzelnen umfasst die Turbine T einen am Turbinengehäuse 5 angeordneten Fangarm 11, der seitlich und gemäß Fig. 1 nach oben in Richtung des Maschinenhauses 2 gerichtet ist und an seinem oberen Ende ein stabförmiges Element aufweist, das nachfolgend als Fangstab 12 bezeichnet wird. Der mit einer vorbestimmten Längserstreckung senkrecht zur Darstellungsebene in Fig. 1 ausgebildete Fangstab 12 ist fest mit dem Fangarm 11 verbunden, und es ist der Fangarm 11 fest mit der Turbine T und speziell mit dem Turbinengehäuse 5 verbunden. Der Fangarm 11 und der Fangstab 12 weisen somit eine starre Verbindung zur Turbine T auf.

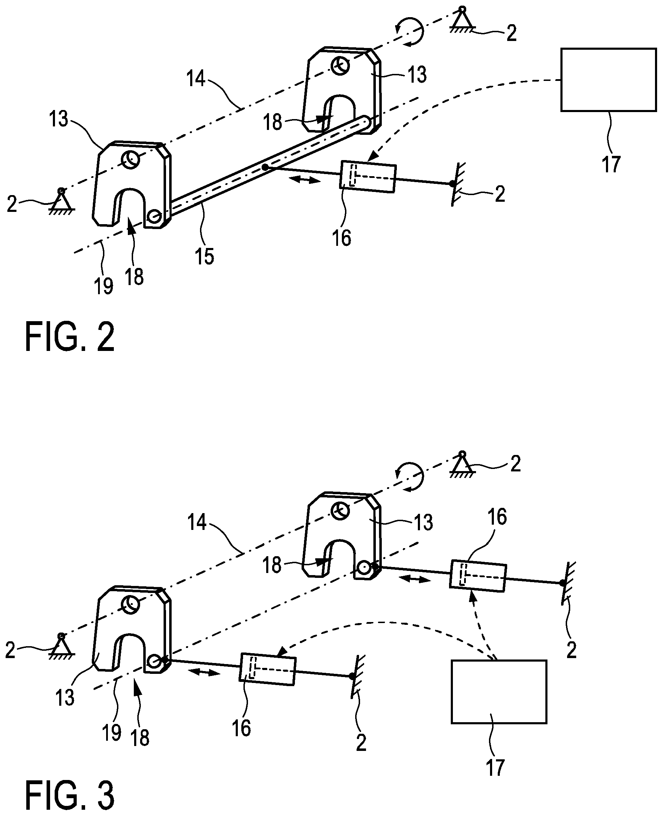

Die Positionier-Vorrichtung P umfasst ferner eine an dem Maschinenhaus 2 angeordnete Fangeinrichtung 13, die einstückig ausgebildet ist und mit dem Maschinenhaus 2 beweglich und in bevorzugter Weise drehbar befestigt bzw. gelagert ist. Die Fangeinrichtung 13 ist in Fig. 1 gezeigt, während die Figuren 2 und 3 weitere Einzelheiten der Fangeinrichtung 13 zeigen.

Gemäß Fig. 2 ist die Fangeinrichtung 13 als eine klauenförmige Anordnung auf beiden Seiten des Maschinenhauses 2 in dessen unterem Bereich angeordnet und drehbar entlang einer ersten Drehachse 14 im Maschinenhaus 2 gelagert. Die Lagerung der Fangeinrichtung 13 bzw. der Fangeinrichtungen 13 zu beiden Seiten des Maschinenhauses ist in Fig. 2 mittels der ersten Drehachse 14 relativ zum Maschinenhaus 2 dargestellt, wobei das Maschinenhaus 2 lediglich als ein Lagerpunkt angedeutet ist, und weitere Teile des Maschinenhauses 2 zur verbesserten Darstellung der Anordnung der Fangeinrichtungen 13 weggelassen sind. Die beiden Fangeinrichtungen 13 zu beiden Seiten des Maschinenhauses 2 sind mit einem Verbindungsstab 15 verbunden, so dass eine bezüglich beider Fangeinrichtungen 13 gleichförmige und gemeinsame Drehbewegung um die erste Drehachse 14 gewährleistet ist. Zum Einleiten einer Drehung der Fangeinrichtungen 13 um die erste Drehachse 14 ist gemäß Fig. 2 zumindest ein Aktuator 16 (Betätigungseinrichtung) vereinfacht und schematisch dargestellt, der in der Lage ist, innerhalb eines vorbestimmten Wegs eine Betätigungskraft (im Wesentlichen eine Druckkraft) auf den Verbindungsstab 15 auszuüben und damit beide Fangeinrichtungen 13 gleichzeitig um die erste Drehachse 14 zu drehen. Der Aktuator 16 ist mit einer Seite an dem Maschinenhaus 2 befestigt, und ist mit der anderen Seite mit dem Verbindungsstab 15 zum Ausüben der entsprechenden Betätigungskraft auf den Verbindungsstab 15 und die beiden Fangeinrichtungen 13 verbunden. Eine Steuerungseinrichtung 17 ist dazu ausgebildet, mittels entsprechender Ansteuerungssignale den Aktuator 16 anzusteuern, damit dieser eine vorbestimmte Kraft auf den Verbindungsstab 15 ausübt und damit eine Verschiebung um einen vorbestimmten Weg um die erste Drehachse 14 erreicht. Der steuernde und/oder regelnde Einfluss der Steuerungseinrichtung 17 auf den Aktuator 16 ist mittels eines Pfeils und einer gestrichelten Linie angedeutet.

Die Fangeinrichtungen 13 gemäß Fig. 2 weisen ferner jeweils eine Vertiefung 18 auf, die in der Weise ausgebildet ist, dass gemäß Fig. 1 bei weiterem Anheben der Turbine T der Fangstab 12, der sich in seiner Längserstreckung senkrecht zur Papierebene gemäß Fig. 1 und parallel zur ersten Drehachse 14 gemäß der perspektivischen Darstellung in Fig. 2 befindet, in die Vertiefung 18 der Fangeinrichtungen 13 gelangen kann. Die weitere Wirkungsweise der Positioniervorrichtung P wird nachstehend noch beschrieben.

Fig. 3 zeigt eine weitere Variante der Anordnung der Fangeinrichtungen 13, wobei in gleicher Weise wie in Fig. 2 jeweils zu beiden Seiten des Maschinenhauses 2 eine Fangeinrichtung 13 angeordnet ist, die ebenfalls entsprechend der ersten Drehachse 14 im Maschinenhaus 2 drehbar gelagert ist. Beide Fangeinrichtungen 13 sind in gleicher Weise wie in Fig. 2 ausgebildet und weisen die Vertiefung 18 auf. Im Vergleich zur Anordnung gemäß Fig. 2 werden die beiden Fangeinrichtungen 13 jeweils individuell mittels eines eigenen Aktuators 16 betätigt, wobei in der Darstellung gemäß Fig. 3 der Verbindungsstab gemäß Fig. 2 weggelassen ist. Die Steuerungseinrichtung 17 ist in der Anordnung gemäß Fig. 3 ausgelegt, beide Aktuatoren 16 gleichzeitig und in gleichem Umfang oder getrennt anzusteuern, so dass im vorliegenden Fall gemäß Fig. 3 die Möglichkeit besteht, beide voneinander unabhängig drehbar gelagerte Fangeinrichtungen 13 gleichförmig oder bedarfsweise zumindest geringfügig unterschiedlich um die erste Drehachse 14 zu drehen.

Die beiden Aktuatoren 16 sind mit ihrer einen Seite am Maschinenhaus 2 gelagert, wobei lediglich ein Lagerpunkt angedeutet ist, während weitere Teile des Maschinenhauses 2 zur besseren Darstellung der Anordnung der Fangeinrichtungen 13 in Fig. 3 weggelassen sind. Die jeweilige andere Seite der Aktuatoren 16 ist mit der zugeordneten Fangeinrichtung 13 verbunden. In jedem Fall verläuft die jeweilige erste Drehachse 14 der Anordnungen gemäß der Figuren 2 und 3 innerhalb des Maschinenhauses 2 oder in dessen Randbereich (wie es in Fig. 1 gezeigt ist), so dass eine stabile Lagerung der ersten Drehachse 14 im Maschinenhaus 2 gewährleistet ist.

Bei den Anordnungen der Fangeinrichtungen 13 gemäß den Figuren 2 und 3 können (in den Figuren 2 und 3 nicht gezeigte) Sensoren vorgesehen sein zur Erfassung der Längsbewegung der jeweiligen Aktuatoren 16 sowie der Drehbewegung der Fangeinrichtungen 13, so dass jederzeit die exakte Position einer jeweiligen Fangeinrichtung 13 oder eines Aktuators 16 bekannt ist und bei der Steuerung der Drehbewegung oder Position der jeweiligen Fangeinrichtungen 13 berücksichtigt werden kann.

In den Figuren 2 und 3 ist die erste Drehachse 14 in Verbindung mit einer Lagerung in dem Maschinenhaus 2 gezeigt. Es besteht in beiden Fällen die Möglichkeit, die Fangeinrichtungen 13 entweder an jeder Seite des Maschinenhauses 2 individuell zu lagern, wobei die Lagerung entlang der ersten Drehachse 14 erfolgt oder es besteht die Möglichkeit, die Fangeinrichtungen 13 auf einer gemeinsamen (nicht gezeigten) Welle anzuordnen, so dass eine gemeinsame oder auch unterschiedliche Drehung gewährleistet ist. Bei einer unterschiedlichen Drehung der beiden Fangeinrichtungen 13 sind die Fangeinrichtungen in der gemeinsamen Welle gelagert, und es ist diese gemeinsame Welle in dem Maschinenhaus 2 befestigt.

Nachstehend wird die Wirkungsweise der vorstehend angegebenen Fangeinrichtung 13 am Beispiel einer Montage der Turbine T der Windenergieanlage W erläutert.

Die vorstehend beschriebene Anordnung gemäß Fig. 1 zeigt eine Position der Turbine T beim Anheben derselben für eine Montage im Maschinenhaus 2 der Windenergieanlage W. Gemäß Fig. 1 befindet sich die Turbine T in der Nähe des Maschinenhauses 2, und bei einem weiteren Anheben der Turbine T gelangt der an dem Fangarm 1 1 angeordnete Fangstab 12 (in seiner Erstreckung im Wesentlichen parallel zur ersten Drehachse 14) in Eingriff mit der Vertiefung 18 der jeweiligen Fangeinrichtung 13. Nähert sich die Turbine T dem Maschinenhaus 2 und nähert sich somit der Fangstab 12 der Vertiefung 18 in den Fangeinrichtungen 13, können mittels der Aktuatoren 16 die Fangeinrichtungen 13 um einen fallweise erforderlichen kurzen Weg bewegt werden, so dass der Eingriff des Fangstabs 12 mit der Vertiefung 18 erleichtert wird. Es ist somit eine Feineinstellung der Position der Fangeinrichtungen 13 möglich.

Bei einem weiterem Anheben der Turbine T mittels des Seils 7 gemäß Fig. 1 liegt der Fangstab 12 vollständig in der Vertiefung 18, so dass bei dieser Position des Fangstabs 12 in der Vertiefung 18 an dieser Stelle ein zeitweiliger Drehpunkt für die Bewegung der Turbine T in ihrer Gesamtheit gebildet wird. Dieser zeitweilige Drehpunkt, der in den jeweiligen Vertiefungen 18 der beiden Fangeinrichtungen 13 liegt, steht im Zusammenhang mit einer hierdurch definierten zweiten Drehachse 19 über die beispielsweise in den Figuren 2 und 3 gezeigten Fangeinrichtungen 13. Die zweite Drehachse 19 ist im Wesentlichen parallel zur ersten Drehachse 14, der Erstreckung des Fangstabs 12 und dem Verbindungsstab 15 gemäß Fig. 2.

Wird die Turbine T mittels des Seils 7 weiter angehoben, wird mit der Bildung des zeitweiligen Drehpunkts in Verbindung mit der zweiten Drehachse 19 eine Schwenkbewegung der Turbine T in das Innere des Maschinenhauses 2 eingeleitet. Hierbei können die Fangeinrichtungen 13 mittels der jeweiligen Aktuatoren 16 im Wesentlichen ortsfest gehalten werden, wobei die jeweiligen Aktuatoren 16 eine Haltekraft auf die damit verbundenen Fangeinrichtungen 13 ausüben. Während der Schwenkbewegung der Turbine T in Richtung des Inneren des Maschinenhauses 2 wird der Fangstab 12 in der Vertiefung 18 der Fangeinrichtungen 13 drehbar entsprechend der zweiten Drehachse 19 gelagert. Bedarfsweise können die Fangeinrichtungen 13 mittels der jeweiligen Aktuatoren auch geringfügig zur Positionsanpassung oder Positionskorrektur bewegt werden.

Am Ende der Schwenkbewegung der Turbine T in Richtung des Inneren des Maschinenhauses 2 stehen sich bei entsprechender Dimensionierung die jeweiligen miteinander zu befestigenden oder zu verschraubenden Befestigungselemente, wie beispielsweise Flansche, im Innern des Maschinenhauses 2 gegenüber, so dass bei beendeter Schwenkbewegung die Turbine T im Maschinenhaus 2 am Turbinenträger 4 befestigt werden kann. Auch in dieser Situation befindet sich der Fangstab 12 in der Vertiefung 18 der jeweiligen Fangeinrichtung 13. Die Schwenkbewegung wird mittels des Seils 7 bis zum möglichen Ende, d.h. dem entsprechenden Anliegen der (nicht gezeigten) Befestigungselemente der Turbine T des Turbinenträgers 4 erreicht.

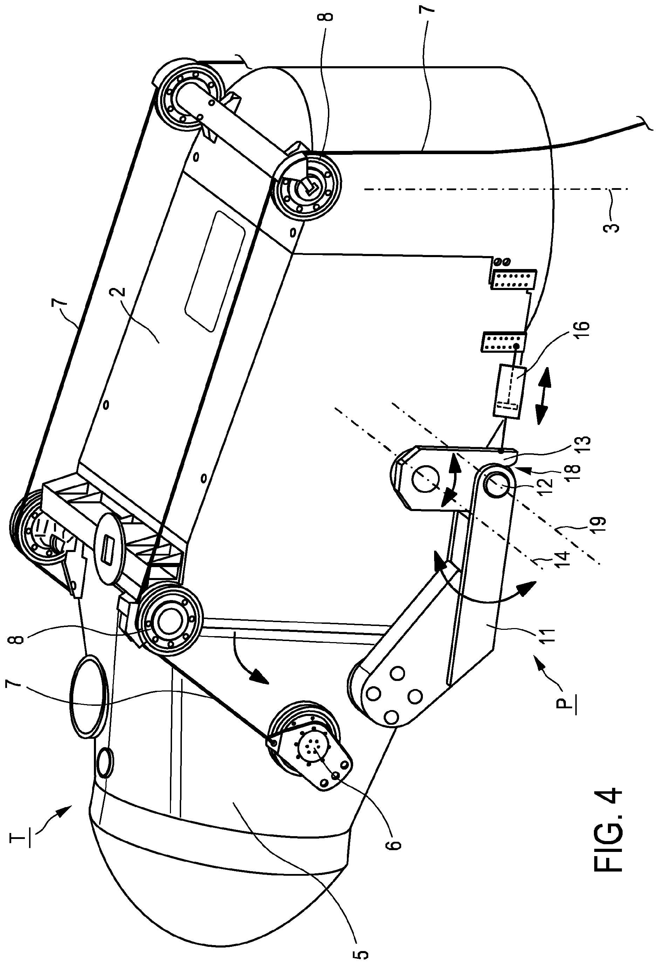

Eine derartige Situation ist beispielsweise in Fig. 4 gezeigt, wobei die Turbine T vollständig in das Maschinenhaus 2 geschwenkt und mit dem Turbinenträger 4 fest verbunden (beispielsweise verschraubt) wurde.

Zum sanften und sicheren Ansetzen der Turbine T mit den jeweiligen Befestigungselementen an die Befestigungselemente des Turbinenträgers 4 besteht die Möglichkeit, während des Schwenkens der Turbine T, während dessen der Fangstab 12 in der Vertiefung 18 der jeweiligen Fangeinrichtung 13 gelagert ist, die Fangeinrichtungen 13 mittels des Aktuators (Fig. 2) oder der jeweiligen Aktuatoren 16 (Fig. 3) gemäß der Darstellung in den Figuren nach links um einen geringen Betrag zu bewegen, so dass die Schwenkbewegung der Turbine T in Richtung des Turbinenträgers 4 bis auf einen kleinen Weg von wenigen Zentimetern erfolgen kann. Stehen die (nicht gezeigten) Befestigungselemente der Turbine T und des Turbinenträgers 4 einander im Wesentlichen parallel gegenüber, können mittels der Aktuatoren 16 die Fangeinrichtungen 13 wieder um einen vorbestimmten Betrag langsam nach rechts bewegt werden, so dass in gleicher Weise die Befestigungselemente der Turbine T und des Turbinenträgers 4 sanft und annähernd parallel aufeinander zu bewegt werden und die Gefahr in erheblichem Umfang vermindert wird, dass die Befestigungselemente verkantet, unkontrolliert oder zu schnell aufeinander zu bewegt werden und so eine Beschädigung hervorrufen können.

Die geringe translatorische Restbewegung, der die Turbine T in diesem Montagezustand unterliegt und die erforderlich ist zum Zusammenfügen der jeweiligen Befestigungselemente der Turbine T und des Turbinenträgers 4 zur vollständigen Befestigung, kann somit in gesteuerter Weise erfolgen. Die Fangeinrichtungen 13 werden mittels des Aktuators 16 (Fig. 2) oder der jeweiligen Aktuatoren 16 (Fig. 3) sanft und gesteuert bewegt, da der Aktuator 16 in diesem Fall die ausgeübte Druckkraft auf die Fangeinrichtungen 13 gesteuert vermindern kann und somit der vom Fangstab 12 der Turbine T ausgeübten Kraft gezielt nachgibt, wobei einerseits die Turbine T von dem Seil 7 über die Umlenkrollen 8 getragen wird und andererseits der Fangstab 12 in der Vertiefung 18 der Fangeinrichtungen 13 gehalten wird.

Bei der translatorischen Restbewegung vor dem endgültigen Zusammenfügen der jeweiligen Befestigungselemente drehen sich somit die Fangeinrichtungen 13 (im Wesentlichen synchron und gleichförmig) um einen kleinen Winkel und bewegt sich somit die zweite Drehachse 19 gemäß der Darstellung in den Figuren nach rechts (noch immer parallel zur ersten Drehachse 14) wobei die entsprechenden Befestigungselemente sanft in Anlage miteinander kommen. Eine endgültige Befestigung ist somit auf einfache und sichere Weise möglich.

Zum Erfassen der translatorischen Restbewegung können Wegesensoren oder Abstandssensoren (die zur Vereinfachung in den Figuren nicht gezeigt sind) verwendet werden, damit die jeweilige Steuerungseinrichtung 17 gezielt die Aktuatoren 16 ansteuern kann, und auch die Seilwinde 9 genau gesteuert oder geregelt werden kann.

Zweites Ausführungsbeispiel:

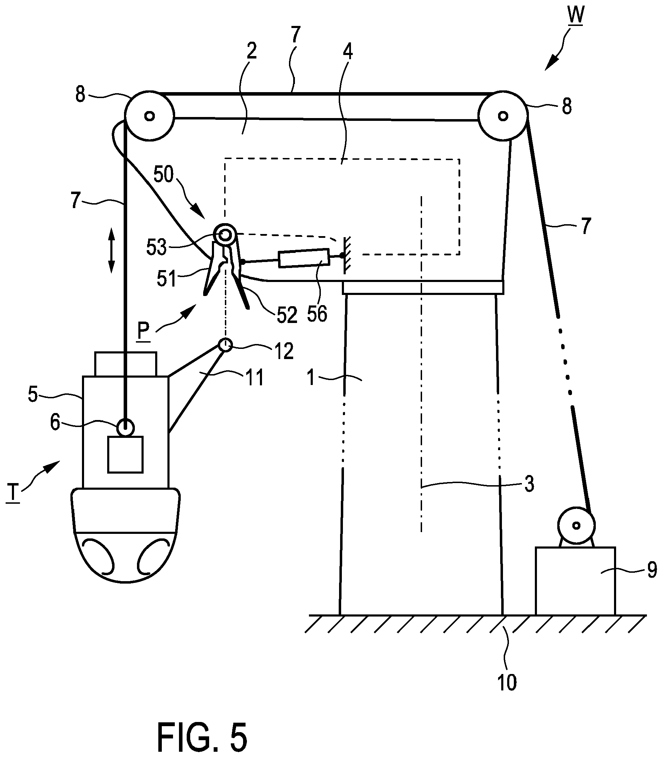

Fig. 5 zeigt ein zweites Ausführungsbeispiel der Positionier-Vorrichtung P für eine Turbine T einer Windenergieanlage W, wobei gleichartige Teile im Vergleich zur Anordnung gemäß Fig. 1 mit denselben Bezugszeichen bezeichnet werden. Unterschiedliche Teile erhalten neue Bezugszeichen. Eine detaillierte Beschreibung der gleichartigen oder identischen Teile oder Sachverhalte wird daher zur Vermeidung von Wiederholungen weggelassen.

Die Anordnung gemäß Fig. 5 ist im Wesentlichen die gleiche wie die Anordnung gemäß Fig. 1 , wobei sich lediglich Teile der Positionier-Vorrichtung P unterscheiden. Somit wird in gleicher Weise erstrebt, eine Turbine T mittels eines Seils 7 anzuheben und nach einer Schwenkbewegung und einer anschließenden translatorischen Bewegung die Turbine in das Maschinenhaus 2 zu bringen, damit sie an einem Maschinenträger 4 befestigt werden kann. Im Wesentlichen unterschiedlich zur Anordnung gemäß Fig. 1 ist die Ausführung der Fangeinrichtung 50 gemäß dem zweiten Ausführungsbeispiel, die anstelle der Fangeinrichtung 13 beim zweiten Ausführungsbeispiel der vorliegenden Erfindung vorgesehen ist.

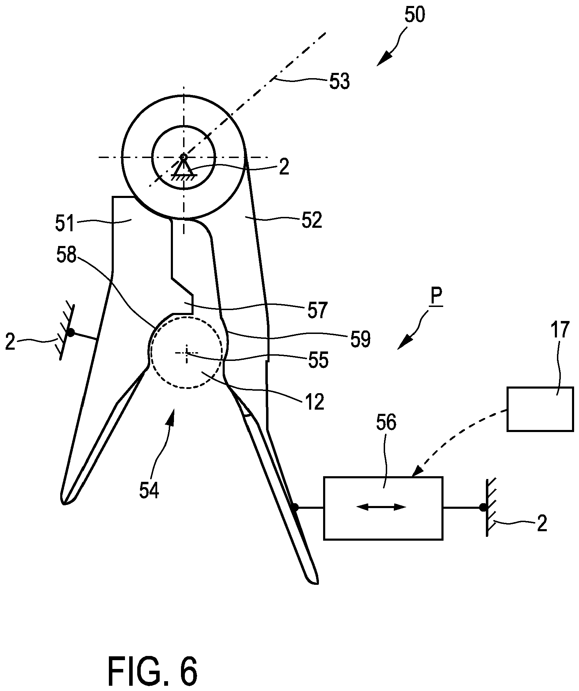

Die Fangeinrichtung 50 des zweiten Ausführungsbeispiels umfasst ein feststehendes Teil oder Festteil 51, das fest mit dem Maschinenhaus 2 der Windenergieanlage W verbunden ist. Die Fangeinrichtung 50 umfasst ferner ein bewegliches Teil 52, das benachbart zu dem Festteil 51 angeordnet ist, so dass ein vorbestimmter Zwischenraum zwischen den beiden Teilen 51 und 52 gebildet werden kann, der im Wesentlichen der Vertiefung 18 (Aufnahme) der Fangeinrichtung 13 des ersten Ausführungsbeispiels entspricht. Das bewegliche Teil 52 weist gemäß Fig. 6 in seinem oberen Teil eine drehbare Lagerung auf, wobei eine Drehung um eine dritte Drehachse 53 möglich ist. Die dritte Drehachse 53 erstreckt sich in gleicher Weise wie die erste Drehachse 14 und die zweite Drehachse 19 und liegt somit ebenfalls parallel zur räumlichen Ausrichtung des Fangstabs 12 am Fangarm 1 1 der Turbine T. Die drehbare Lagerung des beweglichen Teils 52 entlang der dritten Drehachse 53 erfolgt in dem Maschinenhaus 2. Zwischen dem Festteil 51 und dem beweglichen Teil 52 ist die genannte Vertiefung oder Aufnahme 54 gebildet (die auch als ein Zwischenbereich zwischen dem Festteil 51 und dem beweglichen Teil 52 bezeichnet werden kann), in die bei entsprechendem weiteren Anheben der Turbine T in Richtung des Maschinenhauses 2 der Fangstab 12 gelangt und zwischen dem Festteil 51 und dem beweglichen Teil 52 in einer sicheren Lage aufgenommen wird, so dass an dieser Stelle die zweite Drehachse 19 gebildet wird. In Fig. 6 ist zwischen dem Festteil 51 und dem beweglichen Teil 52 die Anordnung des Fangstabs 12 mit einer gestrichelten Linie angedeutet. Es kann für den Fangstab 12 an dieser Stelle in der Fangeinrichtung 50 ein Klemmsitz gebildet werden. Zu diesem Zweck umfasst die Positioniervorrichtung einen Aktuator 56, mittels dessen das bewegliche Teil 52 um die dritte Drehachse 53 gedreht werden kann.

Der Aktuator 56 der Positioniervorrichtung P ist an seiner einen Seite mit einem festen Punkt des Maschinenhauses 2 verbunden, und ist mit der anderen Seite mit einem von der dritten Drehachse 51 entfernten Bereich des beweglichen Teils 52 verbunden.

Das Festteil 51 und das bewegliche Teil 52 weisen an ihren in Fig. 6 gezeigten unteren Enden jeweils schräge Gleitflächen auf, so dass beim Anheben der Turbine T der Fangstab 12 leicht in den Zwischenraum zwischen dem Festteil 51 und dem beweglichen Teil 52 (Vertiefung 54) eingebracht werden kann, wobei am Ende der Bewegung (Anhebebewegung entlang der Turmachse 3) zur Aufnahme des Fangstabs 12 in der Vertiefung 54 das Festteil 51 einen Vorsprung 57 aufweist, so dass mittels des Vorsprungs 57 das Festteil 51 einen Anlagebereich 58 bildet, an dem der Fangstab 12 anliegen kann und durch eine entsprechende Flanke des beweglichen Teils 52 in seiner Lage gehalten wird. Diese Situation ist in Fig. 6 gezeigt, wobei der Fangstab 12 zwischen dem Festteil 51 und dem beweglichen Teil 52 angedeutet ist. Der Aktuator 56 ist in der Lage, entsprechend einer Ansteuerung durch die Steuerungseinrichtung 17 (veranschaulicht mittels einer gestrichelten Linie) das bewegliche Teil 52 zu bewegen (um die dritte Drehachse 53 zu drehen), wobei die entsprechende Flanke des beweglichen Teils 52 gegenüber dem Anlagebereich 58 des Festteils 51 bewegt wird und die Vertiefung 54 vergrößert oder verkleinert werden kann, um nach Auf nähme des Fangstabs 12 im Anlagebereich 58 den Fangstab 12 an dieser Stelle in der Fangeinrichtung 50 sicher zu halten. Auf diese Weise ist eine zumindest leichte Klemmung des Fangstabs 12 zum sicheren Halten desselben möglich. Eine Drehbewegung des Fangstabs 12 um seine Längsachse wird dabei nicht behindert. Der Aktuator 56 bildet somit die Grundlage für eine Verstellung (Änderung, Anpassung) der Öffnungsweite der Vertiefung 54 bzw. einer durch das Festteil 51 und das bewegliche Teil 52 aufgespannten und dazwischen angeordneten Fläche.

In Verbindung mit dem ersten Ausführungsbeispiel wurde beschrieben, wie der zeitweilige Drehpunkt des Fangstabs 12 in der Fangeinrichtung 13 angeordnet wird, während bei einem weiteren Anheben der Turbine T mittels des Seils 7 die Turbine T eine Schwenkbewegung in Richtung des Turbinenträgers 4 durchführt.

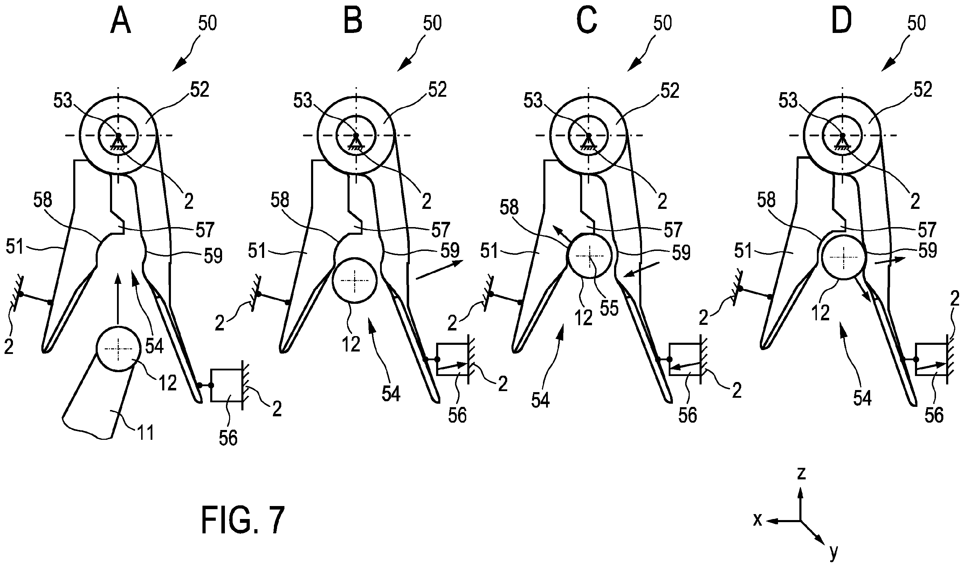

Fig. 7 zeigt in den Teilfiguren 7A bis 7D verschiedene Phasen der Aufnahme des Fangstabs 12 in der Fangeinrichtung 50 gemäß dem zweiten Ausführungsbeispiel, wenn die Turbine T ausgehend von der in Fig. 5 gezeigten Situation weiter angehoben wird, um nach der Aufnahme des Fangstabs 12 in der Fangeinrichtung 50 die Schwenkbewegung der Turbine T einzuleiten.

Gemäß Fig. 7A nähert sich bei dem weiteren Anheben der Turbine T der Fangstab 12 der Vertiefung 54, wobei der Aktuator 56 in der Weise betätigt wurde, dass die Vertiefung 54 eine variable Grundöffnungsweite aufweist. Mit dem weiteren Anheben der Turbine T gelangt gemäß Fig. 7B der am Fangarm 11 (in Figur 7A nur angedeutet) angebrachte Fangstab 12 mit seiner Erstreckung senkrecht zur Bildebene von Fig. 7 näher an den Vorsprung 57 und den Anlagebereich 58. Der Aktuator 56 wird in entsprechender Weise mittels der Steuerungseinrichtung 17 angesteuert, damit die Öffnungsweite der Vertiefung 54 ausreichend groß ist, so dass der Fangstab 12 bei dem weiteren Anheben der Turbine T an dem Vorsprung 57 des Festteils 51 anliegt. Hinsichtlich des Anhebens der Turbine T und somit der mit dem Anheben mittels des Seils 7 durchzuführenden translatorischen Bewegung parallel zur Längsachse 3 des Turms 1 ist mit dem Anliegen des Fangstabs 12 an dem Vorsprung 57 die Anhebebewegung beendet, und es kann gemäß Fig. 7C die Schwenkbewegung der Turbine T in Richtung des Inneren des Maschinenhauses 2 (in Richtung des Turbinenträgers 4) um eine durch die Position des Fangstabs 12 in der Fangeinrichtung definierte vierte Drehachse 55 erfolgen.

Hierbei wird der Aktuator 56 in der Weise angesteuert, dass das untere Ende des beweglichen Teils 52 in den Figuren 6 und 7 nach links bewegt wird, so dass der Fangstab 12 zwischen dem Festteil 51 und dem beweglichen Teil 52 festgehalten wird. In diesem Zustand des Fangstabs 12 an einer zeitweiligen Ruheposition oder an den zeitweiligen Drehpunkt gemäß der vierten Drehachse 55 beginnt die Schwenkbewegung der Turbine T in Richtung des Turbinenträgers 4. Mit dem Festhalten des Fangstabs 12 in der Vertiefung 54 wird somit die vierte Drehachse 55 gebildet, so dass die Turbine T um einen zeitweiligen festen Drehpunkt entsprechend der vierten Drehachse 55 geschwenkt werden kann.

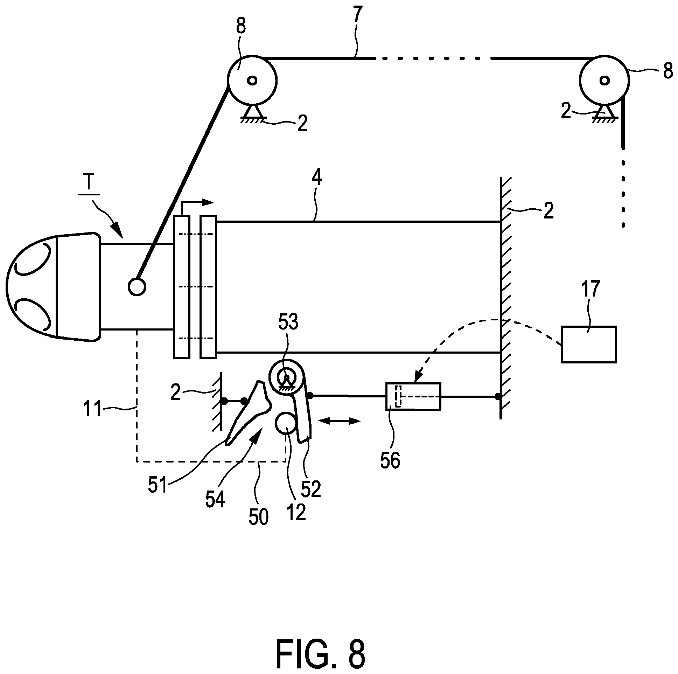

Am Ende der Schwenkbewegung befindet sich die Turbine T in der Nähe des Turbinenträgers 4, wobei erstrebt wird, für die restliche translatorische Bewegung um wenige Zentimeter zum Erreichen einer Anlage zwischen jeweiligen Befestigungselementen der Turbine T und des Turbinenträgers 4 eine sanfte gesteuerte Bewegung zu erreichen. Die Turbine T wird während der gesamten Schwenkbewegung durch das Seil 7 getragen, so dass am Ende der Schwenkbewegung durch das Seil 7 eine schräg nach oben gerichtete Kraft auf die Turbine T wirkt. Die Turbine T befindet sich am Ende der Schwenkbewegung nur noch um die geringe translatorische Restbewegung von der tatsächlichen Anlage der jeweiligen Befestigungselemente aneinander entfernt, wobei eine Kraftkomponente in Richtung des Maschinenträgers 4 besteht. Eine derartige Situation ist in Fig. 8 gezeigt, wobei nachfolgend die Durchführung der translatorischen Restbewegung der Turbine T zur Anlage an den Turbinenträger 4 in Verbindung mit den Figuren 7D und 8 beschrieben wird.

Mit der Position der Turbine gemäß Fig. 7C (hier bezogen auf die Position des Fangstabs 12 zur Fangeinrichtung 50) ist die Schwenkbewegung beendet und es verbleibt die translatorische Restbewegung. Um diese durchzuführen wird der Aktuator 56 in entsprechender Weise angesteuert, so dass dieser die Druckkraft zum Festhalten des Fangstabs 12 vermindert und seinerseits infolge der in den Figuren hauptsächlichen horizontalen Kraftkomponente, die auf die Turbine T infolge der Seilkraft wirkt, die Turbine T und damit auch den an der Turbine T fest angebrachten Fangstab 12 (gemäß der Darstellung in Fug. 7D) nach rechts bewegt wird. Mit der Ansteuerung des Aktuators 56 kann diese Bewegung sehr sanft und langsam erfolgen, so dass ohne Gefahr einer Beschädigung oder auch einer stoßartigen Belastung des Turms 1 mit den bewegten erheblichen Massen der Turbine T eine Anlage der jeweiligen Befestigungselemente der Turbine T und des Turbinenträgers 4 erreicht werden kann. Somit unterstützt die Ansteuerung des Aktuators 56 die Durchführung einer sanften Restbewegung der Turbine T (hier der translatorischen Restbewegung) zur vollständigen Anlage an den Turbinenträger 4 und somit zum Erreichen einer endgültigen Montage- oder Befestigungsposition.

In Fig. 7 ist ebenfalls ein 3-dimensionales Achsenkreuz mit einer x-Achse, einer y-Achse und einer z-Achse dargestellt. Die Bewegung des Anhebens der Turbine erfolgt im Wesentlichen in Richtung der z-Achse, und die Schwenkbewegung erfolgt gemäß Fig. 7C um die vierte Drehachse 55, die parallel zur y-Achse des Koordinatensystems ist. Die translatorische Restbewegung findet in Richtung der x-Achse (im folgenden Fall in negativer Richtung) statt, ungeachtet dessen, dass das bewegliche Teil 52 um die dritte Drehachse 53 durch Betätigung des Aktuators 56 eine Schwenkbewegung durchführt. Da die Schwenkbewegung jedoch wenige Winkelgrade beträgt, entspricht die geringe Drehbewegung des beweglichen Teils 52 angenähert einer translatorischen Bewegung und speziell der translatorischen Restbewegung. Die Turbine T selbst führt (bedarfsweise durch Führungselemente unterstützt) eine translatorische Bewegung in negativer x-Richtung gemäß dem Koordinatensystem in Fig. 7 durch.

Auf diese Weise ist gewährleistet, dass die Turbine T mit einem geringen Aufwand angehoben und mit dem am Fangarm 1 1 angebrachten Fangstab 12 und dessen Führung in der Fangeinrichtung 13 oder 50 während des anschließenden Schwenkvorgangs zwingend geführt wird, indem ein zeitweiliger fester Drehpunkt entsprechend der zweiten Drehachse 19 des ersten Ausführungsbeispiels oder der vierten Drehachse 55 des zweiten Ausführungsbeispiels gebildet wird. Die Schwenkbewegung der Turbine T ist derart dimensioniert, dass am Ende der Schwenkbewegung die translatorische Restbewegung verbleibt, so dass diese in Verbindung mit der beweglichen Fangeinrichtung 13 oder der Fangeinrichtung 50 mit dem beweglichen Teil 52 in gesteuerter Weise durchgeführt werden kann. Im Ergebnis wird eine langsame Bewegung während der translatorischen Restbewegung erreicht, und die Befestigungselemente der Turbine T und des Turbinenträgers 4 können vorsichtig und nahezu risikolos im Hinblick auf eine mögliche Beschädigung in Anlage miteinander gelangen, so dass eine vereinfachte Befestigung durch entsprechendes Personal möglich ist.

Bei der Anordnung der Fangeinrichtung 50 gemäß dem zweiten Ausführungsbeispiel ist in gleicher Weise wie beim ersten Ausführungsbeispiel die identische oder zumindest spiegelsymmetrische Fangeinrichtung 50 zu beiden Seiten des Maschinenhauses 2 angeordnet, wobei jedes bewegliche Teil der beiden Fangeinrichtungen 50 einen eigenen Aktuator 56 aufweist, oder die beweglichen Teile 52 beider Fangeinrichtungen 50 miteinander über einen Verbindungsstab ähnlich dem Verbindungsstab 15 verbunden sind, so dass lediglich ein Aktuator erforderlich ist, um eine synchrone Bewegung der beiden beweglichen Teile 52 zu gewährleisten. Sind die beiden beweglichen Teile 52 der Fangeinrichtungen 50 nicht miteinander verbunden, erfordert jedes bewegliche Teil 52 einen eigenen Aktuator, und es ist die Bewegung (die Ansteuerung oder Betätigung) des jeweiligen Aktuators zu synchronisieren, wobei Sensoreinrichtungen zur Erfassung einer Bewegung des jeweiligen Aktuators 56 oder der Schwenkbewegung des jeweiligen beweglichen Teils 52 vorgesehen sein können. In jedem Fall ist mit der Bereitstellung der getrennten beweglichen Teile 52 in Verbindung mit einem jeweiligen Aktuator 56 die Möglichkeit gegeben, bei einer während des Anhebevorgangs geringfügig schräg hängenden Turbine T in vorbestimmter Weise einen Ausgleich herzustellen.

Die Positionier-Vorrichtung der vorliegenden Erfindung dient somit dazu, einerseits die Montage der Turbine T am Turbinenträger 4 mittels einer Zwangsführung während der Schwenkbewegung zu unterstützen und zu vereinfachen, wobei die exakte Positionierung der jeweiligen Drehachse (zweite Drehachse 19, vierte Drehachse 55) exakt positioniert werden können. Ebenso wird eine exakte Positionierung vorgenommen, wenn die translatorische Restbewegung durchgeführt wird, wobei die Aktuatoren 16 oder 56 die jeweilige Fangeinrichtungen 13 oder 50 ansteuern, damit die sanfte translatorische Restbewegung erfolgen kann. Auch in diesem Fall ist ein exaktes Positionieren der Turbine T relativ zum Turbinenträger 4 während des gesamten Montagevorgangs gewährleistet, ungeachtet dessen, dass durch weitere Führungseinrichtungen die exakte Positionierung noch unterstützt werden kann.

Zwischen dem Festteil 51 und dem beweglichen Teil 52 kann somit ein hinsichtlich seiner Größe veränderbarer Raum gebildet werden, der die Querschnittsfläche des Fangarms 12 aufnimmt und wobei der Fangarm 12 festgehalten werden kann, indem seitens des Aktuators 56 auf das bewegliche Teil 52 eine Kraft ausgeübt wird, den zwischen den Teilen 51 und 52 gebildeten Raum zu verkleinern. Der Fangstab 12 weist vorzugsweise eine kreisförmige Querschnittsfläche auf, wobei die vorliegende Erfindung hierauf jedoch nicht festgelegt ist, und der Fangstab 12 auch eine ovale oder mehreckige Querschnittsfläche aufweisen kann. Die beiden unteren Bereiche des Festteils 51 und des beweglichen Teils 52 bilden somit eine trichterförmige Einrichtung zum Einfädeln des Fangstabs 12. In einer technischen Realisierung weist vorzugsweise die Querschnittsfläche des Fangstabs 12 einen geringfügig größeren Durchmesser auf als der minimal mögliche Abstand zwischen den beiden benachbarten Teilen (Teile 51, 52) der Fangeinrichtung 50. Auf diese Weise ist gewährleistet, dass der Fangstab 12 mittels einer Betätigung des Aktuators 56 festgehalten werden kann, wenn der Fangstab 12 am Vorsprung 57 und Anlagebereich 58 anliegt.

Wird die Turbine T weiter angehoben und nach oben bewegt, kann bei einer entsprechenden Position des beweglichen Teils 52 der Fangarm das bewegliche Teil 52 geringfügig in der Darstellung von Fig. 7C nach rechts drücken, so dass der Fangstab 12 in Anlage mit dem Anlagebereich 58 gelangt. Somit kann für diesen Zustand ebenfalls eine Klemmwirkung erzielt werden.

Mit der erfindungsgemäßen Positioniervorrichtung und insbesondere der Ausbildung der Fangeinrichtungen 13 und 50 wird die Wirkung erzielt, dass die Positionierung der Turbine T (bzw. der Gondel) an dem Turm 1 während eines Montagevorgangs durch eine zwingende Führung in Verbindung mit den Fangeinrichtungen 13 und 50 gewährleistet ist, so dass eine sichere Verbindung zwischen der Turbine T und dem am Turm 1 angeordneten Maschinenhaus 2 ohne weitere technische Einrichtungen oder Maßnahmen eines Personals möglich ist. Es ist somit auch eine exakte Positionierung der jeweiligen Befestigungselemente der Turbine T und des Turbinenträgers 4 gesichert, so dass auch unter ungünstigen Umständen, wie beispielsweise beim Schwingen des Turms 1 sowie der an dem Seil 7 hängenden Turbine T bei Wind eine Befestigung der Turbine T am Turbinenträger 4 und speziell eine Verschraubung zwischen diesen Teilen durchgeführt werden kann. Mit der erfindungsgemäßen Anordnung können auch Fertigungstoleranzen und gegebenenfalls bei dem Anheben der Turbine T auftretende Verformungen in den beteiligten Bauelementen ausgeglichen werden.

Gleichzeitig werden die jeweiligen Befestigungselemente der Turbine T und des Turbinenträgers geschont, da die zweite Drehachse 19 (erstes Ausführungsbeispiel) und die vierte Drehachse 55 (zweites Ausführungsbeispiel) die Schwenkbewegung der Turbine T zwingend führt, um eine annähernd translatorische Restbewegung der jeweiligen Befestigungselemente unmittelbar vor ihrem Kontakt (vor ihrer Anlage) zu ermöglichen. Dies verhindert, dass es zu einem ungewollten bzw. unkontrollierten Kontakt der Befestigungselemente (beispielsweise der Flächen von Flanschen) während des Schwenkvorgangs der Turbine T kommt, wobei in derartigen Fällen Beschädigungen der Befestigungseinrichtungen nicht ausgeschlossen werden können.

Abwandlung des zweiten Ausführungsbeispiels:
Bei dem Festlegen der zweiten und vierten Drehachse 19 und 55 in den jeweiligen Fangeinrichtungen 13, 50 kann ferner die relative Höhe der Turbine T in einem geringen vorbestimmten Maß in z-Richtung verändert werden, so dass die Turbine T höher oder auch tiefer relativ zu den entsprechenden Befestigungseinrichtungen und vor dem Einleiten der translatorischen Restbewegung angeordnet ist, als es erforderlich ist zur Verbindung der jeweiligen Befestigungseinrichtungen. Ist in diesem Zusammenhang die Turbine T gegenüber dem Turbinenträger 4 nach Beenden der Schwenkbewegung und vor dem Einleiten der translatorischen Restbewegung zu tief angeordnet, kann ein derartiger Versatz in negativer Richtung der z-Achse gemäß dem Koordinatensystem in Fig. 7 in Abhängigkeit von der Befestigung des Seils 7 an der Turbine T und dem Maschinenhaus 2 oder der weiteren (hier nicht dargestellten) Ausgestaltung der Turbine T (Massenverteilung, Schwerpunkt) kaum ausgeglichen werden, da die Kraftwirkung des Seils 7 unmittelbar vor dem Kontakt der Befestigungseinrichtung der Turbine T und des Turbinenträgers 4 nur eine geringe für diese Maßnahme wirksame Komponente in der z-Richtung aufweist. Es ist somit kaum möglich, die zu tief hängende Turbine T geringfügig zur Feinanpassung ihrer Position anzuheben.

Somit wird bevorzugt ein minimales Absenken der Turbine relativ zum Turbinenträger 4 in Verbindung mit der translatorischen Restbewegung erstrebt und teilweise auch notwendig, um Fertigungstoleranzen oder Maßverschiebungen durch Verformungen während des Schwenkvorgangs und der Montage auszugleichen. Zu diesem Zweck wird nach dem Beenden der Schwenkbewegung der Turbine T diese vor der Einleitung der translatorischen Restbewegung um den Betrag einer Zusatzerhöhung geringfügig höher angeordnet, als dies zur Verbindung der jeweiligen Befestigungselemente der Turbine T und des Turbinenträgers 4 erforderlich ist. Die geringe Zusatzerhöhung in positiver z-Richtung liegt im Bereich weniger Zentimeter und ist ausreichend zum Ausgleichen von Toleranzen und Verformungen von entsprechend beanspruchten Bauteilen, speziell wenn sich die erheblichen Kraftbeträge und Kraftrichtungen während des Schwenkvorgangs der Turbine T auf die verschiedenen Bauteile kontinuierlich ändern. Aus der geringfügig höheren Position der Turbine T während der translatorischen Restbewegung wird die Turbine T in gesteuerter Weise um diese Zusatzerhöhung abgesenkt, wobei dies einer translatorischen Bewegung in negativer z-Richtung entspricht, die der vorstehend beschriebenen translatorischen Restbewegung (im Wesentlichen in negativer x-Richtung) vektoriell überlagert ist.

Im Zusammenhang mit der in Fig. 4 beschriebenen translatorischen Restbewegung wird ausgehend von der Position gemäß Fig. 7C, bei der der Fangstab 12 festgehalten und geführt wird (vierte Drehachse 55), gemäß Fig. 7D die translatorische Restbewegung eingeleitet durch Nachgeben des Aktuators 56 (gesteuertes Nachlassen der vom Aktuator 56 in x-Richtung auf das bewegliche Teil 52 ausgeübten Druckkraft), wobei ebenfalls eine kleine Bewegung in der negativen Richtung der z-Achse und somit ein geringfügiges Absenken der Turbine T durch gesteuertes Nachlassen des Seils 7 erreicht wird, die sich zur translatorischen Restbewegung vektoriell addiert bzw. dieser überlagert wird. Mit dem geringfügig höheren Anordnen der Turbine T vor Einleiten der translatorischen Restbewegung relativ zum Turbinenträger 4 können sämtliche übliche Fertigungstoleranzen und im Betrieb oder bei der Montage auftretende Maßverschiebungen auf einfache Weise ausgeglichen werden.

Die gesamte translatorische Bewegung besteht somit vorzugsweise aus der translatorischen Restbewegung gemäß Fig. 7D in der negativen x-Achsenrichtung sowie der geringfügigen translatorischen Absenkbewegung in der negativen z-Achsenrichtung. Es geht dies aus einem Vergleich der Position des Fangstabs 12 relativ zu den Komponenten der Fangeinrichtung 50 in den Figuren 7C und 7D hervor. Gegenüber der Darstellung des Fangstabs 12 in Fig. 7C, bei der der Fangstab 12 zur Bildung der vierten Drehachse 55 mittels der Fangeinrichtung 50 festgehalten und für die Schwenkbewegung geführt wird, wird der Fangstab 12 und damit die gesamte Turbine T gemäß Fig. 7D geringfügig, d. h. um die vorstehend angegebene Zusatzerhöhung abgesenkt und weist daher einen geringen Abstand zum Vorsprung 57 des Festteils 51 auf. Dabei liegt der Fangstab 12 kontinuierlich an dem beweglichen Teil 52 an und gleitet in negativer z-Richtung um die Zusatzerhöhung entlang einer speziell ausgebildeten Gleitkontur 59 an der inneren und der Vertiefung 54 angrenzenden Oberfläche des beweglichen Teils 52 hinab. Dies ist durch Pfeile in Verbindung mit dem Fangstab 12 in Fig. 7D angedeutet. Die gleitende Bewegung des Fangstabs 12 an der Gleitkontur 59 um im Wesentlichen die Zusatzerhöhung erfolgt in negativer z-Richtung, so dass sich aus der vektoriellen Überlagerung der beiden translatorischen Bewegungen eine resultierende translatorische Bewegung in schräger Richtung (d. h. in jeweils negativer z- und x-Richtung) ergibt.

Die Gleitkontur 59 bildet eine geringe Vertiefung und ist derart ausgebildet, dass ungeachtet dessen, dass die Gleitbewegung zugelassen wird bzw. möglich ist, ein sicheres Halten des Fangstabs 12 in Verbindung mit der Ausgestaltung des beweglichen Teils 52 gewährleistet ist, so dass der Fangstab 12 nicht vollständig aus der Fangeinrichtung 50 heraus gleitet. Die translatorische Absenkbewegung der Turbine T (negative z-Richtung, vorbestimmte Absenkbewegung) in gesteuerter Weise mittels des Seils 7 kann während der translatorischen Restbewegung (in negativer x-Richtung) kontinuierlich oder zumindest abschnittsweise während der translatorischen Restbewegung oder auch gegen Ende der translatorischen Restbewegung erfolgen. Während der beiden translatorischen Bewegungen erfolgt ein ständiges Führen des Fangstabs 12 mittels des beweglichen Teils 52, wobei in gesteuerter Weise durch die Steuerungseinrichtung 7 die auf den Fangstab 12 ausgeübte Kraft vermindert wird (Zulassen der Bewegung in negativer x-Richtung) und der Fangstab 12 entlang der Gleitkontur 59 herabgleiten kann (Zulassen der Bewegung in negativer z-Richtung).

Hierbei kann die translatorische Absenkbewegung im Wesentlichen parallel zur Längsachse 3 des Turms 1 erfolgen, während die translatorische Restbewegung im Wesentlichen in einer Ebene senkrecht zur Längsachse 3 des Turms 1 erfolgt.

Auf diese Weise ist ein einfaches und gegenüber Beschädigungen der Befestigungseinrichtungen sicheres Bewegen der Turbine T in Richtung des Turbinenträgers 4 gewährleistet. Ein unerwünschter Stoß jeweiliger Befestigungseinrichtungen oder ein reibender Kontakt der entsprechenden Flächen der Befestigungseinrichtungen kann wirksam vermieden werden.

## Patentansprüche

1. Positionier-Vorrichtung zum Positionieren einer Turbine einer Windenergieanlage während der Montage oder Demontage der an einem Seil hängenden Turbine, mit
- zumindest einer Fangeinrichtung (13; 50), die an dem Maschinenhaus (2) der Windenergieanlage (W) drehbar angeordnet ist und eine Vertiefung (18; 54) aufweist zur Aufnahme eines Fangstabs (12), der fest an der Turbine (T) angeordnet ist, zum Einleiten einer Schwenkbewegung der Turbine (T) in das Maschinenhaus (2) zu einer Befestigungsposition,
- zumindest einem Aktuator (16; 56), der einerseits mit dem Maschinenhaus (2) und andererseits mit der Fangeinrichtung (13; 50) verbunden ist, zum Bewegen der Fangeinrichtung (13; 50), und
- einer Steuerungseinrichtung (17) zum Ansteuern des Aktuators (16; 56) zum Bewegen der Fangeinrichtung (13; 50), wobei
- die Steuerungseinrichtung (17) ausgebildet ist zum Ansteuern des Aktuators (16; 56) derart, dass der Aktuator (16; 56) nach der Schwenkbewegung der Turbine (T) eine translatorische Restbewegung der Turbine (T) zur Befestigungsposition zulässt.

2. Vorrichtung nach Anspruch 1 , wobei die Fangeinrichtung (13) einstückig ausgebildet ist und der Aktuator (16) die Fangeinrichtung (13) zusammen mit dem Fangstab (12) zur Durchführung der translatorischen Restbewegung der Turbine (T) um eine vorbestimmte Strecke zur Befestigungsposition bewegt.

3. Vorrichtung nach Anspruch 1 oder 2, wobei an jeder Seite des Maschinenhauses (2) eine Fangeinrichtung (13) angeordnet ist, und der an der an dem Seil hängenden Turbine (T) angeordnete Fangstab (12) beim Anheben der Turbine (T) in sämtliche Fangeinrichtungen (13) eingreift und zur Durchführung der Schwenkbewegung geführt wird.

4. Vorrichtung nach Anspruch nach Anspruch 3, wobei jede Fangeinrichtung (13) mit einem Aktuator (16) betätigt wird zur Durchführung einer individuellen Bewegung jeder Fangeinrichtung (13), oder die Fangeinrichtungen (13) mittels eines Verbindungsstabs (15) miteinander verbunden sind und durch einen gemeinsamen Aktuator (16) betätigt werden, der mit dem Verbindungsstab (15) verbunden ist.

5. Vorrichtung nach Anspruch 1, wobei
- die zumindest eine an dem Maschinenhaus (2) der Windenergieanlage (W) angeordnete Fangeinrichtung (50) mehrteilig ausgeführt ist und zumindest einen Festteil (51), der fest mit dem Maschinenhaus (2) verbunden ist, und einen beweglichen Teil (52) aufweist, der drehbar um eine Drehachse (53) mit dem Maschinenhaus (2) verbunden ist und zwischen dem Festteil (51) und dem beweglichen Teil (52) ein Zwischenbereich (54) ausgebildet ist zur Aufnahme des fest an der Turbine (T) angeordneten Fangstabs (12) zum Einleiten der Schwenkbewegung der Turbine (T) in das Maschinenhaus (2) zu einer Befestigungsposition,
- der zumindest eine Aktuator (56) einerseits mit dem Maschinenhaus (2) und andererseits mit dem beweglichen Teil (52) der Fangeinrichtung (50) verbunden ist zum Bewegen des beweglichen Teils (52) um die Drehachse (53), wobei der Aktuator (56) mittels der Steuerungseinrichtung (17) zur Durchführung der Bewegung angesteuert wird, und wobei
- die Steuerungseinrichtung (17) ausgebildet ist zum Ansteuern des Aktuators (56) derart, dass durch die Betätigung des beweglichen Teils (52) durch den Aktuator (56) der Zwischenbereich (54) zur Aufnahme des Fangstabs (12) in seiner Größe veränderlich ist.

6. Vorrichtung nach Anspruch 5, wobei der Festteil (51) der Fangeinrichtung (50) einen Vorsprung (57) mit einem Anlagebereich (58) aufweist zur Aufnahme des Fangstabs (12) bei dem Anheben der Turbine (T), und wobei der Fangstab (12) zwischen dem Anlagebereich (58) und dem beweglichen Teil (52) zur Durchführung der Schwenkbewegung der Turbine (T) gehalten wird.

7. Vorrichtung nach Anspruch 6, wobei nach der Beendigung der Schwenkbewegung der Turbine (T) der Aktuator (56) derart angesteuert wird, dass das bewegliche Teil (52) durch den Aktuator (56) um eine vorbestimmte Strecke versetzt wird, und der an dem beweglichen Teil (52) anliegende Fangstab (12) zusammen mit der Turbine (T) eine translatorische Restbewegung senkrecht zur einer Anhebebewegung der Turbine (T) zu einer Befestigungsposition durchführt.

8. Vorrichtung nach einem der Ansprüche 5 bis 7, wobei an jeder Seite des Maschinenhauses (2) eine Fangeinrichtung (50) angeordnet ist und der an der an dem Seil hängenden Turbine (T) angeordnete Fangstab (12) in sämtliche Fangeinrichtungen (50) eingreift und zur Durchführung der Schwenkbewegung der Turbine (T) gehalten wird.

9. Vorrichtung nach Anspruch 8, wobei das bewegliche Teil (52) jeder Fangeinrichtung (50) mit einem Aktuator betätigt wird zur Durchführung der individuellen Bewegung jedes beweglichen Teils (52) der Fangeinrichtung, oder die jeweiligen beweglichen Teile (52) der Fangeinrichtungen (50) auf jeder Seite des Maschinenhauses (2) miteinander mittels eines Verbindungsstabs (15) verbunden sind und durch einen gemeinsamen Aktuator (56) betätigt werden, der mit dem Verbindungsstab (15) verbunden ist.

10. Vorrichtung nach einem der Ansprüche 5 bis 9, wobei das bewegliche Teil (52) an seiner inneren Seite gegenüber dem Festteil (51) eine Führungskontur (59) aufweist zum Halten des Fangstabs (12) während der translatorischen Restbewegung, und zum Gleiten des Fangstabs (12) entlang der Führungskontur (59) zum Erlauben einer vorbestimmten Absenkbewegung des Fangstabs (12) zumindest abschnittsweise während der translatorischen Bewegung.

11. Vorrichtung nach Anspruch 10, wobei die Steuerungseinrichtung (17) ausgebildet ist zum Ansteuern des Aktuators (56) derart, dass die von dem Aktuator (56) auf das bewegliche Teil (52) ausgeübte Kraft zum Zulassen der translatorischen Restbewegung und der translatorischen Absenkbewegung in vorbestimmter Weise vermindert wird.

## Claims

1. Positioning device for positioning a turbine of a wind turbine during the installation or deinstallation of the turbine hanging on a cable, with
- at least one catching device (13; 50), which is rotatably disposed on the machine housing (2) of the wind turbine (W) and has a recess (18; 54) for the reception of a catching rod (12), which is fixedly disposed at the turbine (T), for the initiation of a pivoting movement of the turbine (T) into the machine housing (2) to a fastening position,
- at least one actuator (16; 56), which is on one side connected with the machine housing (2) and on the other side with the catching device (13; 50), for moving the catching device (13; 50), and
- a controlling device (17) for activating the actuator (16; 56) to move the catching device (13, 50), wherein
- the controlling device (17) is designed to activate the actuator (16; 56) such that the actuator (16; 56) after the pivoting movement of the turbine (T) allows a translational remainder movement of the turbine (T) to the fixing position.

2. Device according to claim 1, wherein the catching device (13) is formed integrally and the actuator (16) moves the catching device (13) together with the catching rod (12) for carrying out the translational remainder movement of the turbine (T) by a predetermined distance to the fastening position.

3. Device according to claim 1 or 2, wherein on each side of the machine housing (2) is disposed a catching device (13), and the catching rod (12) disposed at the turbine (T) hanging on the cable, when the turbine (T) is lifted, engages in all catching devices (13) and is guided in order to carry out the pivoting movement.

4. Device according to claim according to claim 3, wherein each catching device (13) is operated with an actuator (16) to carry out an individual movement of each catching device (13), or the catching devices (13) are connected with one another by means of a connecting rod (15) and are operated by a shared actuator (16), which is connected with the connecting rod (15).

5. Device according to claim 1, wherein
- the at least one catching device (50) disposed at the machine housing (2) of the wind turbine (W) is designed in a plurality of parts and has at least one fixed part (51), which is fixedly connected with the machine housing (2), and a movable part (52), which is connected with the machine housing (2) rotatably around a rotational axis (53) and between the fixed part (51) and the movable part (52) is formed an interim area (54) for the reception of the catching rod (12) disposed fixedly at the turbine (T) for initiating the pivoting movement of the turbine (T) into the machine housing (2) to a fastening position,
- the at least one actuator (56) is connected on one side with the machine housing (2) and on the other side with the movable part (52) of the catching device (50) for moving the movable part (52) around the rotational axis (53), wherein the actuator (56) is activated by means of the controlling device (17) for carrying out the movement, and wherein
- the controlling device (17) is formed to activate the actuator (56) such that through the operation of the movable part (52) by means of the actuator (56) the interim area (54) for receiving the catching rod (12) is changeable in its size.

6. Device according to claim 5, wherein the fixed part (51) of the catching device (50) has a protrusion (57) with a bearing area (58) for the reception of the catching rod (12) at the lifting of the turbine (T), and wherein the catching rod (12) is held between the bearing area (58) and the movable part (52) for carrying out the pivoting movement of the turbine (T).

7. Device according to claim 6, wherein after the end of the pivoting movement of the turbine (T) the actuator (56) is activated such that the movable part (52) is displaced by the actuator (56) by a predetermined distance and the catching rod (12) bearing on the movable part (52) carries out together with the turbine (T) a translational remainder movement, perpendicular to a lifting movement of the turbine (T), to a fastening position.

8. Device according to one of claims 5 to 7, wherein on each side of the machine housing (2) is disposed a catching device (50) and the catching rod (12) disposed at the turbine (T) hanging on the cable engages in all catching devices (50) and is held for carrying out the pivoting movement of the turbine (T).

9. Device according to claim 8, wherein the movable part (52) of each catching device (50) is operated with an actuator for carrying out the individual movement of each movable part (52) of the catching device, or the respective movable parts (52) of the catching devices (50) are connected with one another on each side of the machine housing (2) by means of a connecting rod (15) and are operated by a shared actuator (56), which is connected with the connecting rod (15).

10. Device according to one of claims 5 to 9, wherein the movable part (52) has at its inner side opposite to the fixed part (51) a guiding contour (59) for holding the catching rod (12) during the translational remainder movement, and for gliding the catching rod (12) along the guiding contour (59) for allowing a predetermined lowering movement of the catching rod (12) at least sectionally during the translational movement.

11. Device according to claim 10, wherein the controlling device (17) is designed to activate the actuator (56) such that the force exerted by the actuator (56) on the movable part (52) for allowing the translational remainder movement and the translational lowering movement is reduced in predetermined manner.

## Revendications

1. Dispositif de positionnement pour le positionnement d'une turbine d'une éolienne pendant le montage ou le démontage de la turbine suspendue à un câble, avec
- au moins un dispositif d'arrêt (13 ; 50), qui est agencé de manière rotative au niveau de la nacelle (2) de l'éolienne (W) et présente un évidement (18 ; 54) pour la réception d'une barre d'arrêt (12), qui est agencée fixement au niveau de la turbine (T), pour déclencher un mouvement de pivotement de la turbine (T) dans la nacelle (2) vers une position de fixation,
- au moins un actionneur (16 ; 56), qui est relié d'un côté à la nacelle (2) et d'un autre côté au dispositif d'arrêt (13 ; 50), pour déplacer le dispositif d'arrêt (13 ; 50), et
- un dispositif de commande (17) pour commander l'actionneur (16; 56) pour déplacer le dispositif d'arrêt (13 ; 50), dans lequel
- le dispositif de commande (17) est réalisé pour commander l'actionneur (16 ; 56) de telle sorte que l'actionneur (16 ; 56) autorise après le mouvement de pivotement de la turbine (T) un mouvement résiduel de translation de la turbine (T) vers la position de fixation.

2. Dispositif selon la revendication 1, dans lequel le dispositif d'arrêt (13) est réalisé d'un seul tenant et l'actionneur (16) déplace le dispositif d'arrêt (13) conjointement avec la barre d'arrêt (12) pour réaliser le mouvement résiduel de translation de la turbine (T) d'une distance prédéterminée vers la position de fixation.

3. Dispositif selon la revendication 1 ou 2, dans lequel un dispositif d'arrêt (13) est agencé de chaque côté de la nacelle (2), et la barre d'arrêt (12) agencée au niveau de la turbine (T) suspendue au câble entre en prise lors du levage de la turbine (T) dans tous les dispositifs d'arrêt (13) et est guidée pour la réalisation du mouvement de pivotement.

4. Dispositif selon la revendication la revendication 3, dans lequel chaque dispositif d'arrêt (13) est actionné avec un actionneur (16) pour la réalisation d'un mouvement individuel de chaque dispositif d'arrêt (13), ou les dispositifs d'arrêt (13) sont reliés l'un à l'autre au moyen d'une barre de liaison (15) et sont actionnés par un actionneur commun (16), qui est relié à la barre d'arrêt (15).

5. Dispositif selon la revendication 1, dans lequel
- l'au moins un dispositif d'arrêt (50) agencé au niveau de la nacelle (2) de l'éolienne (W) est réalisé en plusieurs parties et présente au moins une partie fixe (51), qui est reliée fixement à la nacelle (2), et une partie mobile (52), qui est reliée de manière rotative autour d'un axe de rotation (53) à la nacelle (2) et une zone intermédiaire (54) est réalisée entre la partie fixe (51) et la partie mobile (52) pour la réception de la barre d'arrêt (12) agencée fixement au niveau de la turbine (T) pour déclencher le mouvement de pivotement de la turbine (T) dans la nacelle (2) vers une position de fixation,
- l'au moins un actionneur (56) est relié d'un côté à la nacelle (2) et d'un autre côté à la partie mobile (52) du dispositif d'arrêt (50) pour déplacer la partie mobile (52) autour de l'axe de rotation (53), dans lequel l'actionneur (56) est commandé au moyen du dispositif de commande (17) pour la réalisation du mouvement, et dans lequel
- le dispositif de commande (17) est réalisé pour commander l'actionneur (56) de telle sorte que la taille de la zone intermédiaire (54) pour la réception de la barre d'arrêt (12) est variable par l'actionnement de la partie mobile (52) par l'actionneur (56).

6. Dispositif selon la revendication 5, dans lequel la partie fixe (51) du dispositif d'arrêt (50) présente une saillie (57) avec une zone d'appui (58) pour la réception de la barre d'arrêt (12) lors du levage de la turbine (T), et dans lequel la barre d'arrêt (12) est maintenue entre la zone d'appui (58) et la partie mobile (52) pour la réalisation du mouvement de pivotement de la turbine (T).

7. Dispositif selon la revendication 6, dans lequel après la fin du mouvement de pivotement de la turbine (T), l'actionneur (56) est commandé de telle sorte que la partie mobile (52) est décalée par l'actionneur (56) d'une distance prédéterminée, et la barre d'arrêt (12) s'appuyant contre la partie mobile (52) réalise conjointement avec la turbine (T) un mouvement résiduel de translation perpendiculairement à un mouvement de levage de la turbine (T) vers une position de fixation.

8. Dispositif selon l'une quelconque des revendications 5 à 7, dans lequel un dispositif d'arrêt (50) est agencé de chaque côté de la nacelle (2) et la barre d'arrêt (12) agencée au niveau de la turbine (T) suspendue au câble entre en prise dans tous les dispositifs d'arrêt (50) et est retenue pour la réalisation du mouvement de pivotement de la turbine (T).

9. Dispositif selon la revendication 8, dans lequel la partie mobile (52) de chaque dispositif d'arrêt (50) est actionnée avec un actionneur pour la réalisation du mouvement individuel de chaque partie mobile (52) du dispositif d'arrêt, ou les parties mobiles (52) respectives des dispositifs d'arrêt (50) sont reliées l'une à l'autre de chaque côté de la nacelle (2) au moyen d'une barre de liaison (15) et sont actionnées par un actionneur commun (56), qui est relié à la barre de liaison (15).

10. Dispositif selon l'une quelconque des revendications 5 à 9, dans lequel la partie mobile (52) présente au niveau de son côté intérieur par rapport à la partie fixe (51), un contour de guidage (59) pour retenir la barre d'arrêt (12) pendant le mouvement résiduel de translation, et pour faire glisser la barre d'arrêt (12) le long du contour de guidage (59) pour autoriser un mouvement d'abaissement prédéterminé du dispositif d'arrêt (12) au moins par sections pendant le mouvement de translation.

11. Dispositif selon la revendication 10, dans lequel le dispositif de commande (17) est réalisé pour commander l'actionneur (56) de telle sorte que la force exercée par l'actionneur (56) sur la partie mobile (52) est réduite pour autoriser le mouvement résiduel de translation et le mouvement d'abaissement de translation de manière prédéterminée.
